# EUROPEAN PATENT SPECIFICATION

(11) **EP 0 369 794 B1**
(45) Date of publication and mention of the grant of the patent: **17.01.1996**
(21) Application number: 89311893.5
(22) Date of filing: 16.11.1989
(51) Int. Cl.: G11B 7/00, G11B 9/00, G11B 11/00

(54) **Optical information recording medium and recording/reproducing system**
Optisches Aufzeichnungsmedium und Aufnahme-/Wiedergabesystem
Milieu d'enregistrement optique et système d'enregistrement/reproduction

(30) Priority: 16.11.1988 JP 289707/88
(43) Date of publication of application: 23.05.1990
(73) Proprietor: VICTOR COMPANY OF JAPAN, LTD., Yokohama-shi Kanagawa 221 (JP)
(72) Inventor: Takanashi, Itsuo, Kamakura-Shi Kanagawa-Ken (JP); Nakagaki, Shintaro, 5450, Ooba Fujisawa-Shi Kanagawa-Ken (JP); Shinonaga, Hirohiko, Kohoku-Ku Yokohama-Shi Kanagawa-Ken (JP); Asakura, Tsutou, Yokohama-Shi Kanagawa-Ken (JP); Furuya, Masato, Yokosuka-Shi Kanagawa-Ken (JP); Tai, Hiromichi, Yokosuka-Shi Kanagawa-Ken (JP)
(74) Representative: Dawson, Elizabeth Ann

(56) References cited:
- EP-A- 0 249 214
- EP-A- 0 273 773
- EP-A- 0 327 236
- WO-A-87/05737
- FR-A- 2 111 293
- GB-A- 799 829
- US-A- 3 723 651
- US-A- 3 769 512
- US-A- 3 859 639
- US-A- 3 951 519
- US-A- 4 095 280

## Description

The present invention relates to an optical information recording medium and a recording/reproducing system. More specifically, it relates to an optical information recording medium and a recording/reproducing system capable of recording/reproducing an image of high quality and of being efficiently used for printing and electronic publishing applications.

A video signal obtained by picking up an optical image of an object with a color image pickup apparatus can be easily processed such as editing, trimming and the like. Recording/reproducing a video signal can also be easily performed by using an alterable memory. These techniques have been widely used in the field of television broadcasting, magnetic image recording apparatus or the like.

Various new television systems such as EDTV (extended definition TV), HDTV (high definition TV) and the like have been proposed to meet recent requirements of high quality and resolution of reproduced images. Electronic imaging systems using video signals which allow a reproduced image of high quality and resolution are used in various fields such as printing, electronic publishing and the like.

Typical conventional electronic imaging systems include (1) a system wherein a color TV camera of a three-tube type or a single tube type is used to obtain color image signals which are then recorded in a recording medium such as VTR, semiconductor memory, magnetic disk or the like and reproduced to obtain the color image signals, (2) a system wherein a color TV camera of a three-solid state sensor type or a single solid state sensor type is used to obtain color image signals which are then recorded in a recording medium such as VTR, semiconductor memory, magnetic disk or the like and reproduced to obtain the color image signals, (3) a system wherein a laser telecine camera is used to obtain video image signals by picking up a color image recorded on a color film with an ordinary camera, and other systems. If images obtained in such electronic imaging systems are to be used in the field of printing or the like, it is necessary to have a resolution of 4000 x 4000 pixels. However, such a high resolution is not possible due to the characteristics of image pickup tube or solid state image pickup device and a recording system to be used. The resolution therefore has a limit of about 1000 x 2000 pixels which is obtained by HDTV.

In a conventional color TV camera commonly used for obtaining video signals, an optical image of an object picked up with a taking lens is focussed on a photoelectric conversion element (target) of an image pickup device via a color separation optical system, and converted into electric image information which is time sequentially outputted as serial video signals. Various image pickup tubes and solid image pickup devices have been used as the image pickup device for such a color TV camera.

In order to reproduce images with high quality and resolution, it is necessary for an image pickup apparatus to generate a video signal by which an image of high quality and resolution can be reproduced. However, an image pickup apparatus using an image pickup tube has a limit in reducing the diameter of an electron beam, and also the target capacity thereof increases as its size becomes large, resulting in a poor resolution, Further, for high resolution moving images, the frequency band of a video signal becomes larger than several tens to hundreds MHz, thus posing a problem of poor S/N. The above problems have made it difficult to obtain video signals which can reproduce images of high quality and resolution.

As described above, a conventional color TV camera has a resolution limit of 1000 x 2000 pixels of an image pickup device of HDTV, and cannot obtain a resolution of 4000 x 4000 pixels necessary for printing and electronic publishing applications. Conventional electronic imaging systems (1) to (3) described above, cannot obtain video signals which allow reproduced images of high quality and resolution.

It is an object of the present invention to provide an optical image information recording medium and a recording/reproducing system using the same, which is simple in structure and prevents the sensitivity and resolution from being lowered or deteriorated during reproducing.

In order to achieve the above object, the present invention provides a recording medium and a recording/reproducing system using the same, which prevents the sensitivity and resolution from being lowered or deteriorated during reproducing, by using as the structural element of the recording medium a photo-modulation layer which is used during the reproducing operation. The recording medium is of a laminated structure of at least a photo-modulation layer and a charge image forming layer, characterised in that said charge image forming layer comprises a dielectric layer having therein a layer of photoconductive fine particles and a dielectric thin film formed on said layer of photoconductive fine particles. The photo-modulation layer may be an electrochromic layer.

With the recording medium having a laminated structure of at least a photo-modulation layer and a charge image forming layer, a charge image is recorded in the photo-modulation layer while changing the state of the photo-modulation layer in accordance with the electric field generated by the charge image formed on the charge image forming layer. With the recording medium having a laminated structure of at least a photo-modulation layer and a photoconductive layer, a charge image is recorded in the photo-modulation layer while changing the state of the photo-modulation layer in accordance with the electric field generated by the charge image formed at the boundary between the two layers. With the recording medium having a laminated structure of at least an electrochromic layer and a charge image forming layer, a charge image is recorded as a colored image in the electrochromic layer by the electric field generated by the charge image formed on the charge image forming layer. With the recording medium having a laminated structure of at least an electrochromic layer and a photoconductive layer, a charge image is recorded as a colored image in the electrochromic layer by the electric field generated by the charge image formed at the boundary between the two layers. During the recording operation of a charge image, an electric field of a predetermined intensity is applied in the direction of layer lamination, and a light modulated by the image information is applied to the recording medium.

During the reproducing operation, a reading light is applied to the recording medium to read the information recorded in the medium. In order to transfer the information recorded in a first recording medium to another second recording medium, both the recording mediums are disposed facing each other, and while applying an electric field of a predetermined intensity in the direction of layer lamination of the second recording medium, a light transmitted through the first recording medium is applied to the photoconductive layer of the second recording medium.

Structures including a charge-image forming layer or photoconductive layer alongside a photomodulation layer have been proposed for other applications. For example, US-A-3769512 discloses an optic relay comprising a laminated structure including a dielectric mirror sandwiched between a layer of electro-optical material and a photoconductive layer. This structure is not used for the storage of image information.

EP-A-0273773 discloses an image pick-up device including a dielectric mirror sandwiched between a layer of photoconductive material and a nematic liquid crystal. In an image pick-up device, information is written into a medium and concurrently read out from the medium by another light beam. Thus, the device is always illuminated by the object whose image is to be recorded and is not required to store the image for any length of time. A similar structure is shown in US-A-3951519 which uses a liquid crystal as optical modulator and includes an optional charge forming layer to prolong the life of the device. Again this is simply an image pick-up device for transferring rather than storing optical information.

EP-A-0249214 discloses a special optoelectronic tape which stores an image in the form of varying charge density distributions which are read by an electron beam. This document discloses the use of an image suppressing layer in the form of an ultra thin interfacial zone for preventing the transfer of thermally or photogenerated charge carriers to the image storage zone. However, no use is made of a photomodulation layer.

GB-A-799829 discloses a very early memory device comprising discrete particles of photoconductive material dispersed in an insulator material, the whole being located between plate electrodes. Again, no mention is made of using a photomodulation layer.

EP-A-0327236, was published after the priority date of the present application but has an earlier priority date itself, and designates Germany, France, the United Kingdom and the Netherlands. This document discloses in figure 4 an optical information recording medium comprising a laminated structure including a photoconductive layer and a photomodulation layer, separated by a dielectric mirror. The dielectric mirror suppresses charge transfer. An electrode is laminated to the photomodulation layer.

Certain embodiments of the invention will now be described by way of example only and with reference to the accompanying drawings in which:
Figs. 1 to 28 are partial side cross sections showing typical examples of a recording medium for explaining the present invention;
Figs. 29 to 34 are block diagrams showing exemplary structures of a recording system for recording information in the recording medium according to the present invention;
Figs. 35 to 41 are block diagrams showing exemplary structures of a reproducing system for reproducing the information recorded in the recording medium according to the present invention;
Fig. 42 is a block diagram showing the structure of a still image recording/reproducing apparatus;
Fig. 43 is a block diagram showing the structure of a moving image recording/reproducing apparatus;
Fig. 44 is a plan view showing an example of a recorded state of an image;
Fig. 45 is a plan view showing the structure of a color separation optical system;
Fig. 46 is a perspective view showing the color separation optical system;
Fig. 47 is a side view showing the structure of a photo-photo conversion element;
Fig. 48 is an example of the light transmission factor of a photo-modulation layer of a photo-photo conversion element;
Figs. 49(a) and 49(b) show other examples of a recording medium for explaining the present invention;
Fig. 50 is a side view showing a conventional recording system; and
Fig. 51 is a side view showing a conventional reproducing system.

Prior to giving the detailed description of the embodiments, the background art related to this invention will first be described.

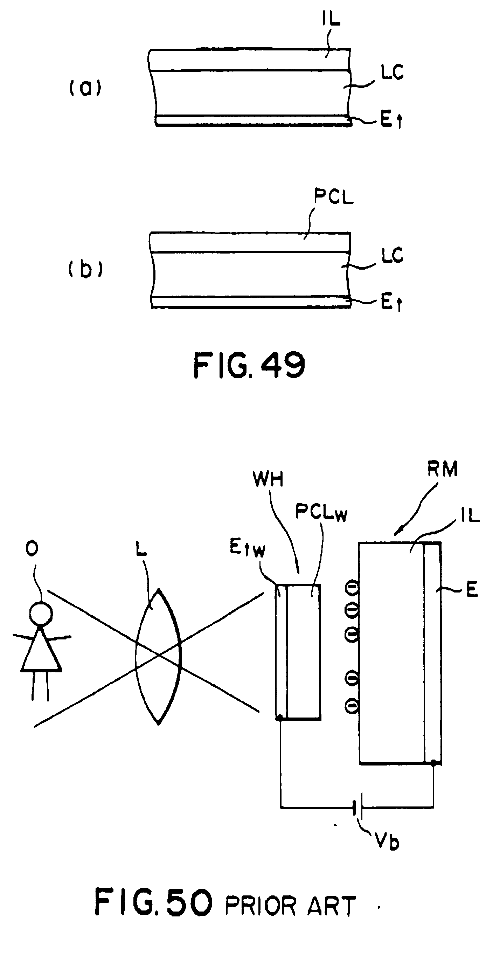

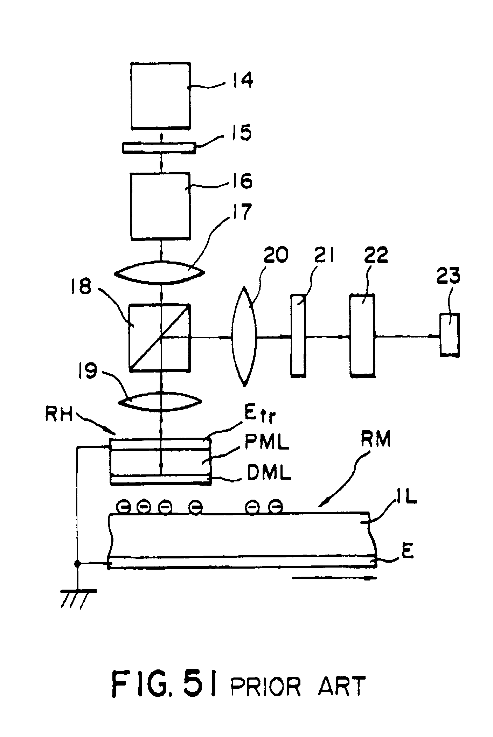

In order to solve the above-described problems, the applicant company of this invention has proposed an image pickup/recording/reproducing method capable of picking up, recording and reproducing an image with high resolution, while using a charge image. Figs. 50 and 51 are block diagrams showing the outline of an image pickup/recording/reproducing apparatus according to the method. Fig. 50 shows the image pickup/recording system, and Fig. 51 shows the image reproducing system.

Referring to Fig. 50, a recording medium RM of the image pickup/recording system is constructed of a dielectric or insulating layer IL and an electrode E. The dielectric layer IL faces a photoconductive layer PCLw of a recording head (writing head) WH with a small gap therebetween.

In the recording operation, a power source Vb is connected between a transparent electrode Etw laminated upon the photoconductive layer PCLw and the electrode E, with its negative side being applied to the transparent electrode Etw, and an optical image of an object O is applied to the transparent electrode side Etw via a taking lens L.

In the image pickup/recording system shown in Fig. 50, when the optical image of the object O is focussed via the taking lens L and transparent electrode Etw onto the photoconductive layer PCLw, the resistance value of the layer PCLw changes in accordance with an intensity distribution of the focussed optical image. The voltage distribution between the photoconductive layer PCLw and dielectric layer IL accordingly changes with the focussed optical image.

Arcing occurs at the gap between the surfaces of the photoconductive layer PCLw and dielectric layer IL to make the gap conductive, so that a negative charge image corresponding to the focussed optical image is formed at the surface of the dielectric layer IL.

The charge image formed as described above has a high resolution. The charge image is reproduced by a reproducing system (charge image reading system) having the structure as shown in Fig. 51.

Referring to Fig. 51, a dielectric mirror DML of a reproducing head (charge image reading head) RH is positioned facing the dielectric layer IL of the recording medium RM.

The reproducing head RH is constructed of the dielectric mirror DML, photo-modulation layer PML and transparent electrode Etr laminated one upon another in this order. The photo-modulation layer PML has a characteristic of changing its optical performance in accordance with an applied electric field thereto, and is made of a photo-modulation material (e.g., lithium niobate or nematic liquid crystal having the electro-optical effect).

While applying an electric field generated by the charge image on the recording medium RM to the dielectric mirror DML side, a light incident from the photo-modulation layer PML is reflected by the dielectric mirror DML and passed again through the photo-modulation layer PML to be emitted out therefrom. In this case, the optical state (angle of polarization plane) of the emitted light changes from that of the incident light, in accordance with the charge distribution and magnitude of the charge image.

In this example, a light radiated from a laser source 14(or a light source using a halogen lamp) is passed through a polarizer 15 to make it a linear polarized light beam which is then applied to a light deflector 16 (if the laser source 14 radiates a linear polarized light, the polarizer 15 is not necessary).

The deflector 16 deflects the incident light two dimensionally like a television raster. The deflected light is applied to a collimator lens 17 which converts the incident light into a parallel light and applies it to a beam splitter 18.

The light incident to the beam splitter 18 is converged by a lens 19 and applied to the reading head RH, As described before, the dielectric mirror DML of the reading head RH facing the dielectric layer IL of the recording medium RM is applied with an electric field generated by the charge image recorded on the dielectric layer IL, and the light converted in a parallel light and emitted out from the reading head RH has its rotation amount of polarization plane changed with the charge distribution and magnitude of the charge image on the recording medium RM.

The emitted light from the reading head RH is again passed through the lens 19 and beam splitter 20, and applied to a converging lens 20 which converges the incident light. The converged light is then applied to a wave plate 21 for setting an optical bias and an analyzer 22 for converting the rotation amount of polarization plane into a change in intensity. The light passed through the analyzer 22 is focussed on a photoelectric conversion device 23 positioned at the focal point of the converging lens 20. Video signals whose amplitude changes with the charge magnitude of the charge image on the recording medium RM can thus be obtained from the photoelectric conversion device 23.

Since the video signals outputted from the photoelectric conversion device 23 correspond to the charge distribution and magnitude of a charge image having a high resolution, if a laser beam having a small diameter is used as the reading light, it is possible to generate video signals of high resolution.

As described previously, the charge image is reproduced while applying an electric field generated by the charge image to the photo-modulation layer PML via the dielectric mirror DML of the recording head RH. In this case, there is associated with a problem of lowering a reading sensitivity or deteriorating a reading resolution because of the diversion of electric lines of force at the gap between the photo-modulation layer PML and dielectric layer IL.

Now, typical examples for explaining the present invention will be described.

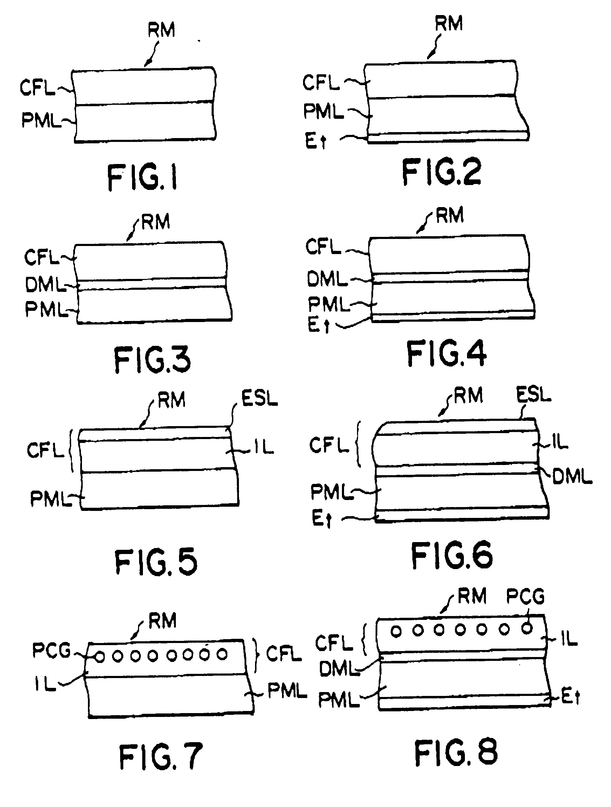

Figs. 1 to 28 are partial side cross sections of typical examples of the recording medium for explaining the present invention. A recording medium RM shown in Fig. 1 has a laminated structure of a photo-modulation layer PML and a charge image forming layer CFL. A recording medium RM shown in Fig. 2 has a laminated structure same as shown in Fig. 1, and an electrode Et attached to the surface of the photo-modulation layer PML (the electrode Et is a transparent electrode where it is necessary. This is applicable also to other embodiments).

The photo-modulation layer PML is made of known material which can change the optical state of a light passing therethrough, such as lithium niobate, Bi₁₂SiO₂₀ (hereinafter abbreviated as BSO), lead lanthanum zirconate titanate (PLZT) and liquid crystal, respectively having the electro-optical effect. The photo-modulation layers PML shown in Figs. 2 to 13 are also made of such a material.

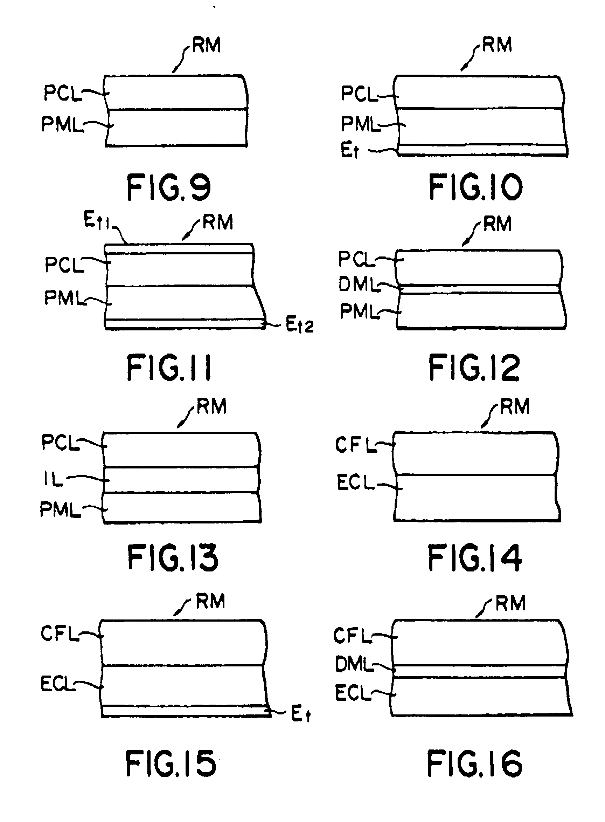

The recording mediums shown in Figs. 14 to 28 have an electrochromic layer ECL instead of the photo-modulation layer PML shown in Figs. 1 to 13.

The charge image forming layer CFL is made of, e.g., a dielectric layer, the material thereof being selected from a group of suitable high molecular organic substances.

The photo-modulation layer PML and charge image forming layer CFL are formed by means of vapor deposition, sputtering or the like, and thereafter laminated one upon the other. The recording medium may be formed in a disk, sheet, tape, card, or other various shapes (Such arrangement is also applicable to the recording mediums shown in Figs. 2 to 28).

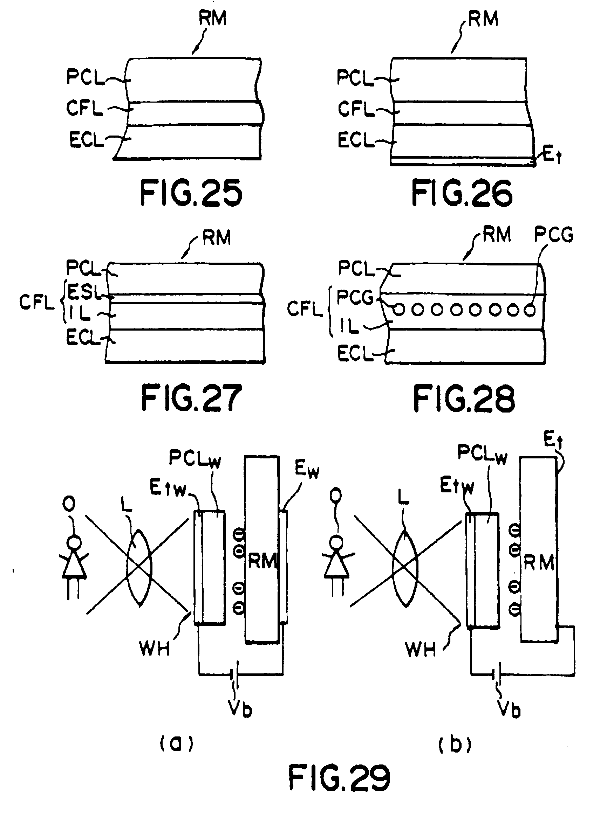

Referring to a recording system shown in Fig. 29(a), in recording information in the recording medium RM shown in Fig. 1, an electrode Ew is contacted to the surface of the photo-modulation layer PML, and a recording head WH constructed of a photoconductive layer PCLw and a transparent electrode Etw is disposed in front of the recording medium RM. With this arrangement, while connecting a power source Vb between the electrode Ew and transparent electrode Etw, an optical image of an object O is focussed via a taking lens L onto the photoconductive layer PCLw.

The resistance of the photoconductive layer PCLw changes correspondingly with the intensity distribution of the optical image of the object O focussed thereon. With the power source Vb being connected between the electrode Ew and transparent electrode Etw, the electric field intensity between the photoconductive layer PCLw and charge image forming layer CFL changes with the resistance value of the photoconductive layer PCLw. A charge image formed on the charge image forming layer CFL through discharge (arcing) between the recording head RH and recording medium RM therefore corresponds to the optical image of the object O.

The recording medium RM shown in Fig. 2 has the electrode Et already attached thereto as described previously, so that a charge image is formed by a recording system shown in Fig. 29(b). Specifically, a recording head WH is disposed in front of the recording medium RM and a power source Vb is connected between the electrode Et originally applied to the recording medium RM and the transparent electrode Etw. With this arrangement, an optical image of an object O is focussed via a taking lens L onto the photoconductive layer PCLw.

The resistance of the photoconductive layer PCLw changes with the optical image of the object O focussed thereon, With the power source Vb being connected between the electrode Ew and transparent electrode Etw, the electric field intensity between the photoconductive layer PCLw and charge image forming layer CFL changes with the resistance value of the photoconductive layer PCLw. A charge image formed on the charge image forming layer CFL through discharge between the recording head RH and recording medium RM therefore corresponds to the optical image of the object O.

The electric field generated by the charge image on the charge image forming layer CFL of the recording mediums RM shown in Figs. 1 and 2 is subjects the photo-modulation layer PML. Accordingly, the photo-modulation layer PML changes its state in accordance with the charge image.

In this condition, a reading light (reproducing light) of a predetermined light intensity is applied to the photo-modulation layer PML. It is apparent that the light transmitted through, or reflected from, the photo-modulation layer PML is modulated in its polarization plane thus having the information of the charge image on the charge image forming layer CFL.

If the charge image forming layer CFL is made of transparent material with respect to the reading light (reproducing light), the reading light passing through the recording medium RM is used as a reproducing light for reproducing the recorded information. If the charge image forming layer CFL is made of opaque material with respect to the reading light, the reading light projected from the side of the photo-modulation layer PML passes through the photo-modulation layer PML, then is reflected from the charge image forming layer CFL, and again passes through the photo-modulation layer PML to exit therefrom, an arrangement of such is used for reproducing the recorded information.

If the photo-modulation layer PML is made of a material such as lithium niobate, BSO, PLZT or liquid crystal, respectively having the electro-optical effect as described previously, a reading light having a specific polarization plane is transmitted through the photo-modulation layer PML having a change corresponding to the charge image on the charge image forming layer CFL, and the reading light with its polarization modulated accordingly is applied to an analyzer to obtain a light whose intensity is modulated in accordance with the charge image recorded in the recording medium RM.

If the photo-modulation layer PML is made of a material such as PLZT or liquid crystal, respectively having the diffusion effect, the reading light transmitted through the photo-modulation layer PML and having a change in diffusion magnitude can be used as a reproducing light for reproducing the information recorded in the recording medium.

In the case where the reflected reading light from the charge image forming layer CFL made of opaque material is used as a reproducing light for the information recorded in the recording medium, it is necessary to have a large reflection coefficient at the boundary between the photo-modulation layer PML and charge image forming layer CFL, in order to obtain the reproducing light of high intensity.

The recording mediums RM shown in Figs. 3 and 4 each have a dielectric mirror DML disposed at the boundary between the photo-modulation layer PML and charge image forming layer CFL, the layer CFL being made of opaque material relative to the reading light. With this arrangement, the reading light is applied from the photo-modulation layer PML, which advances inside the photo-modulation layer efficiently reflected by the dielectric mirror DML then goes back to exit from the photo-modulation layer PML so that the reproducing light of high intensity can be obtained.

The recording system to be used for the recording mediums RM shown in Figs. 3 and 4 may use those shown in Figs. 29(a) and 29(b) used for the recording mediums shown in Figs. 1 and 2.

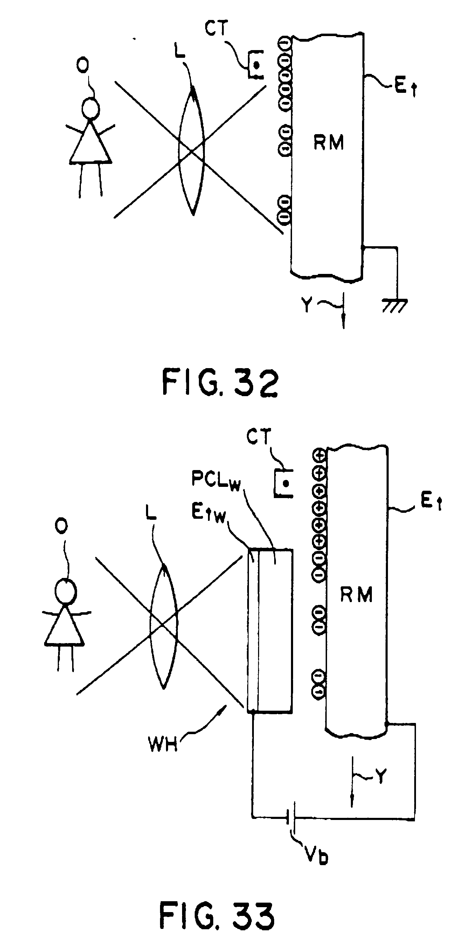

Recording information in the recording medium RM is carried out as shown in Figs. 29(a) and 29(b) wherein an electric field is oriented in the direction of lamination of layers as the power source Vb is connected between the electrodes. In other cases, recording information in the recording medium RM may be carried out in such a manner that a charger CT such as shown in Fig. 32 may be used to supply charges to the recording medium and apply an electric field in the direction of the layer lamination of the recording medium RM. These two types of information recording are also applicable to other recording mediums to be described hereinafter.

Fig. 5 shows another embodiment wherein the charge image forming layer CFL of the recording medium RM is constructed of a charge transfer suppressing layer ESL and a dielectric layer IL.

The charge transfer suppressing layer ESL is made of a thin dielectric layer such as silicon dioxide thin film, or alumina thin film which film allows, by the tunnel effect, a large tunnel current to flow when a large electric field is applied thereacross.

The layers constituting the recording medium RM shown in Fig. 5 are formed by vapor deposition, sputtering or other processes, and sequentially laminated one upon another.

For recording information in the recording medium RM shown in Fig. 5, the recording system shown in Fig. 29(a) used for the recording medium RM shown in Fig. 1 may be used.

Specifically in recording information in the recording medium RM shown in Fig. 5, the electrode Ew is contacted to the photo-modulation layer PML, and the recording head WH constructed of the transparent electrode Etw and photoconductive layer PCLw is placed in front of the charge transfer suppressing layer ESL of the recording medium. With this arrangement, while connecting the power source Vb between the electrode Ew and transparent electrode Etw, an optical image of an object O is focussed via the taking lens L onto the photoconductive layer PCLw of the recording head WH.

The resistance of the photoconductive layer PCLw changes with the optical image of the object O focussed thereon. With the power source Vb being connected between the electrode Ew and transparent electrode Etw, the electric field intensity between the photoconductive layer PCLw and charge motion suppressing layer ESL changes with the resistance value of the photoconductive layer PCLw. A charge image corresponding to the optical image of the object O is formed, through discharge (arcing) between the recording head WH and recording medium RM, on the surface of the charge transfer suppressing layer ESL of the charge image forming layer CFL.

The intensity of the electric field applied across the charge transfer suppressing layer ESL and the dielectric layer IL corresponds to the optical image of the object O. A current flows in the charge transfer suppressing layer ESL because of the tunnel effect, so that a charge image corresponding to the optical image of the object O is formed at the boundary between the charge transfer suppressing layer ESL and the dielectric layer IL.

The charge image recorded at the boundary between the two layers ESL and IL is maintained stored stably for a long period of time, because the charge image is unexposed to the atmosphere but contained in the recording medium RM.

The electric field generated by the charge image formed at the boundary between the two layers ESL and IL of the charge image forming layer CFL of the recording mediums RM shown in Fig. 5 is applied to the photo-modulation layer PML. Accordingly, the photo-modulation layer PML changes its state in accordance with the charge image.

In this condition, a reading light (reproducing light) of a predetermined light intensity is applied to the photo-conductive layer PML. It is apparent that the light transmitted through, or reflected from, the photo-modulation layer PML represents the information of the charge image on the charge image forming layer CFL.

If the charge image forming layer CFL is made of transparent material to the reading light (reproducing light), the reading light passing through the recording medium RM is used as a reproducing light for the reproduction of the recorded information. If the charge image forming layer CFL is made of opaque material to the reading light, the reading light advancing through the photo-modulation layer PML, reflected from the charge image forming layer CFL, and again returning through the photo-modulation layer PML to be emitted out therefrom, is used as a reproducing light for the recorded information.

If the photo-modulation layer PML is made of a material such as lithium niobate, BSO, PLZT or liquid crystal, respectively having the electro-optical effect as described previously, a reading light having a specific polarization plane is transmitted through the photo-modulation layer PML having a property change corresponding to the charge image on the charge image forming layer CFL, and the reading light with its polarization modulated accordingly is applied to an analyzer to obtain a light whose intensity is modulated in accordance with the charge image recorded in the recording medium RM.

In the case where the reflected reading light from the charge image forming layer CFL made of opaque material is used as a reproducing light for reproducing the information recorded in the recording medium, it is necessary to have a large reflection coefficient at the boundary between the photo-modulation layer PML and charge image forming layer CFL, in order to obtain the reflected reproducing light of high intensity.

The recording mediums RM shown in Fig. 6 has a dielectric mirror DML disposed at the boundary between the photo-modulation layer PML and dielectric layer IL of the recording medium shown in Fig. 5, the charge image forming layer CFL being made of opaque material to the reading light. With this arrangement, the reading light applied from the photo-modulation layer PML, making a round trip therein, and exiting therefrom, is used as a reproducing light for reproduction of the information recorded in the recording medium RM, where the reading light is efficiently reflected by the dielectric mirror DML so that the reproducing light of high intensity can be obtained. An electrode is represented by Et in Fig. 6.

The recording medium RM in accordance with the invention shown in Fig. 7 has a laminated structure of the photo-modulation layer PML and charge image forming layer CFL. The charge image forming layer CFL is made of a dielectric layer IL having therein a layer of photoconductive fine particles PCG.

The dielectric layer IL is made of a dielectric material having a high insulating resistance, e.g., a high molecular film. The photoconductive fine particle PCG layer is formed in such a manner that a number of photoconductive fine particles PCG are distributed separately from each other on or within the dielectric layer IL by a suitable means, and thereafter, a thin film of dielectric material is deposited, e.g., by means of vapor deposition or sputtering. In order to separately distribute photoconductive fine particles PCG, a photoconductive material may be vapor-deposited or sputtered by using a mask.

The layers of the recording medium RM are formed by means of vapor deposition, sputtering or the like, and thereafter laminated one upon the other.

In order to record information in the recording medium RM shown in Fig. 7, the recording system shown in Fig. 29(a) used for recording information in the recording medium shown in Fig. 1 may be used.

Specifically, referring to the recording system shown in Fig. 29(a), in recording information in the recording medium RM shown in Fig. 7, an electrode Ew is contacted to the surface of the photo-modulation layer PML, and a recording head WH constructed of a photoconductive layer PCLw and a transparent electrode Etw is disposed in front of the charge image forming layer CFL made of the dielectric layer IL having therein the photoconductive fine particles PCG. With this arrangement, while connecting a power source Vb between the electrode Ew and transparent electrode Etw, an optical image of an object O is focussed via a taking lens L onto the photoconductive layer PCLw.

As a result, a two dimensional resistance distribution of the photoconductive layer PCLw changes correspondingly with the intensity pattern of the optical image of the object O focussed thereon. With the power source Vb being connected between the electrode Ew and transparent electrode Etw, the electric field intensity between the photoconductive layer PCLw and charge image forming layer CFL made of the dielectric layer IL having therein the photoconductive fine particle PCG layer, changes with the distribution of resistance value of the photoconductive layer PCLw. A charge image (negative charge image in Fig. 29(a)) is therefore formed on the charge image forming layer CFL through discharge (arcing) between the recording head WH and recording medium RM.

Upon application of a memorizing light from a light source (not shown) to the charge image forming layer CFL on which the charge image was formed, the photoconductive fine particles PCG deposited on or burried within the dielectric layer IL generate pairs of electron and hole. The dielectric layer IL is transparent to the recording light for this purpose, but it may be opaque to the reading light (reproducing light).

The negative charges of the negative charge image formed on the surface of the dielectric layer IL are attracted to the photoconductive fine particles PCG because of the presence of an electric field generated between the positive holes of the particles PCG and the negative charges of the negative charge image, so that the holes in the particles PCG are neutralized by the attracted negative charges. In this arrangement, applying an external bias such as from the power source Vb, is not necessarily needed as the negative charges and the positive holes are attracted each other without such bias. As a result, the electrons of the hole-electron pairs are left to form a negative charge image corresponding to the optical image of the object O being stored in the photoconductive fine particle PCG layer (PCG layer).

Since the charge image recorded in the PCG layer is enclosed in the dielectric layer IL, it is held therein stably for a long period of time.

The electric field generated by the charge image formed on the PCG layer within the dielectric layer IL of the recording medium RM shown in Fig. 7, by using the recording system shown in Fig. 29(a), is applied to the photo-modulation layer PML so that the layer PML changes its optical state correspondingly with the charge image formed on the PCG layer within the dielectric layer IL.

In this condition, a reading light (reproducing light) of a predetermined light intensity is applied to the photo-modulation layer PML. It is apparent that the light transmitted through, or reflected from, the photo-modulation layer PML carries the information of the charge image in the form of modulated polarization plane.

If the charge image forming layer CFL is made of transparent material to the reading light (reproducing light), the recorded information is read out when the reading light passes through the recording medium RM. If the charge image forming layer CFL is made of opaque material to the reading light, the recorded information is read out when the reading light advances through the photo-modulation layer PML, and is reflected from the charge image forming layer CFL, and again passes through the photo-modulation layer PML to exit therefrom.

If the photo-modulation layer PML is made of a material such as lithium niobate, BSO, PLZT or liquid crystal, respectively having the electro-optical effect as described previously, a reading light having a specific polarization plane is transmitted through the photo-modulation layer PML having a change corresponding to the charge image on the PCG layer within the dielectric layer IL, and the reading light with its polarization modulated is applied to an analyzer to obtain a light whose intensity is modulated correspondingly with the charge image recorded in the recording medium RM.

In the case where the reflected reading light from the charge image forming layer CFL made of opaque material is used as a reproducing light for the information recorded in the recording medium, it is necessary to have a large reflection coefficient of the boundary between the photo-modulation layer PML and charge image forming layer CFL, in order to obtain the reproducing light of high intensity.

The recording medium RM in accordance with the invention shown in fig. 8 has a dielectric mirror DML disposed at the boundary between the photo-modulation layer PML and the dielectric layer IL of the charge image forming layer CFL of the recording medium shown in Fig. 7, the layer CFL being made of opaque material to the reading light. With this arrangement, the reading light is applied from the side of the photo-modulated layer PML, which advances therethrough, and is efficiently reflected by the dielectric mirror DML and further travels back in the photo-modulation layer PML so that the reproducing light of high intensity can be obtained for reading the recorded information. An electrode laminated to the photo-conductive layer PML is represented by Et in Fig. 8.

Next, the recording mediums RM shown in Figs. 9 to 13 will be described. The recording mediums RM shown in Figs. 9 to 13 each have a laminated structure of at least a photo-modulation layer PML and a photoconductive layer PCL, in place of the laminated structure of at least the photo-modulation layer PML and the charge image forming layer CFL of the recording mediums RM shown in Figs. 1 to 8.

The recording medium RM shown in Fig. 9 has a laminated structure of the photo-modulation layer PML and the photoconductive layer PCL. The recording medium RM shown in Fig. 10 has an electrode Et laminated to the surface of the photo-modulation layer PML of the recording medium RM shown in Fig. 9. The recording medium RM shown in Fig. 11 has an electrode Et2 and electrode Et1 respectively laminated to the surfaces of the photo-modulation layer PML and the photoconductive layer PCL of the recording medium RN shown in Fig. 9. The recording medium RM shown in Fig. 12 has a dielectric mirror DML disposed between the photo-modulation layer PML and photoconductive layer PCL of the recording medium RM shown in Fig. 9. The recording medium RM shown in Fig. 13 has a dielectric layer IL between the photo-modulation layer PML and photoconductive layer PCL of the recording medium RM shown in Fig. 9.

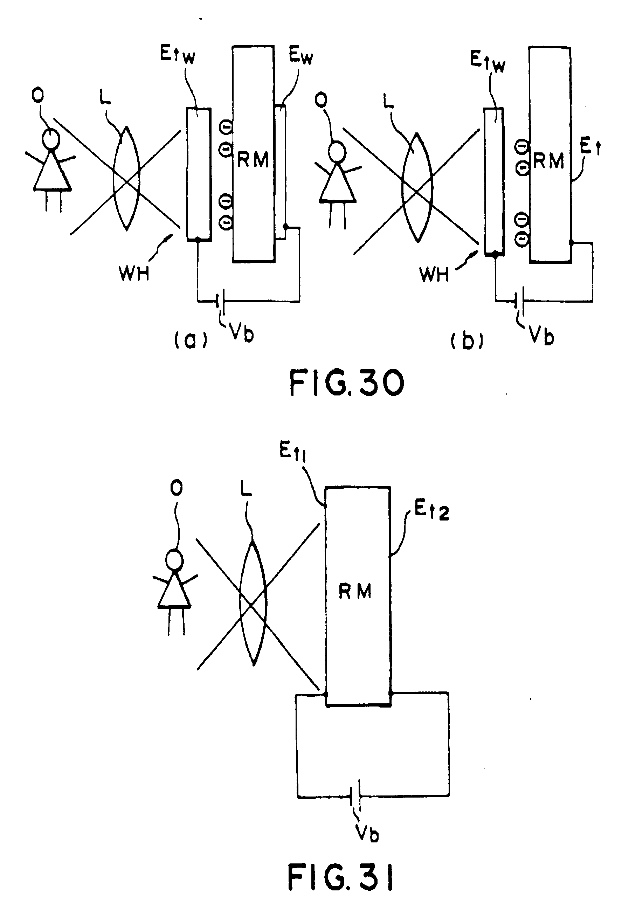

Referring to a recording system shown in Fig. 30(a), in recording information in the recording medium RM shown in Fig. 9, an electrode Ew is contacted to the surface of the photo-modulation layer PML, and a recording head WH constructed of a transparent electrode Etw is disposed in front of the photoconductive layer PCL of the recording medium RM. With this arrangement, while connecting a power source Vb between the electrode Ew and transparent electrode Etw, an optical image of an object O is focussed by a taking lens L through the transparent electrode Etw onto the photoconductive layer PCL.

The resistance of the photoconductive layer PCL changes with the optical image of the object O focussed thereon as in the previous embodiments. With the power source Vb being connected between the electrode Ew and transparent electrode Etw, the electric field intensity between the photoconductive layer PCL and photo-modulation layer PML changes correspondingly with the resistance distributions of the photoconductive layer PCL. A charge image formed at the boundary between the photoconductive layer PCL and photo-modulation layer PML through discharge between the transparent electrode Etw of the recording head WH and recording medium RM therefore corresponds to the intensity pattern of the optical image of the object O.

The recording medium RM shown in Fig. 10 has the electrode Et laminated thereto as described previously, so that a charge image is formed by a recording system shown in Fig. 30(b). Specifically, a recording head WH constructed of a transparent electrode Etw is disposed in front of the photoconductive layer PCL of the recording medium RM. With this arrangement, while connecting a power source Vb between the electrode Ew and transparent electrode Etw, an optical image of an object O is focussed by a taking lens L through the transparent electrode Etw onto the photoconductive layer PCL.

The resistance of the photoconductive layer PCL changes with the optical image of the object O focussed thereon. With the power source Vb being connected between the electrode Et and transparent electrode Etw, the electric field intensity between the photoconductive layer PCL and photo-modulation layer PML changes correspondingly with the resistance value of the photoconductive layer PCL. A charge image formed at the boundary between the photoconductive layer PCL and photo-modulation layer PML through discharge between the recording medium RM and the recording head WH therefore corresponds to the optical image of the object O.

An electric field generated by the charge image formed at the boundary between the photoconductive layer PCL and photo-modulation layer PML of the recording medium RM shown in Figs. 9 and 10, by using the recording systems shown in Figs. 30(a) and 30(b), is applied to the photo-modulation layer PML, so that the optical characteristics of the layer PML changes correspondingly with the pattern of charge image formed on the photoconductive layer PCL.

In this condition, a reading light (reproducing light) of a predetermined light intensity is applied to the photo-modulation layer PML of the recording medium shown in Figs. 9 and 10. It is apparent that the light passing through, or reflected from the photo-modulation layer PML, carries the information of the charge image on the charge image forming layer CFL.

In this case, the reading light should have its wavelength not absorbed by the photoconductive layer PCL, so that the reading light does not cause the photoconductive layer PCL becoming low resistance, otherwise the charge image at the boundary between the photoconductive layer PCL and the photo-modulation layer PML may be lost.

The recording medium RM shown in Fig. 11 has the electrodes Et1 and Et2 attached thereto as described previously, so that a charge image is formed by a recording system shown in Fig. 31, without having a recording head WH.

While connecting a power source Vb between the electrodes Et1 and Et2 respectively attached to the surfaces of the photoconductive layer PCL and the photo-modulation layer PML, an optical image of an object O is focussed by a taking lens L through the electrode Et1 onto the photoconductive layer PCL of the recording medium RM.

The resistance of the photoconductive layer PCL changes with the optical image of the object O focussed thereon. With the power source Vb being connected between the electrodes Et1 and Et2 of the recording medium RM, the electric field intensity between the photoconductive layer PCL and photo-modulation layer PML changes with the two dimensional distribution resistance of the photoconductive layer PCL. A charge image is therefore formed at the boundary between the photoconductive layer PCL and photo-modulation layer PML correspondingly with the optical image of the object O.

An electric field generated by the charge image formed at the boundary between the photoconductive layer PCL and photo-modulation layer PML of the recording medium RM shown in Fig. 11, by using the recording systems shown in Fig. 31, is applied to the photo-modulation layer PML, so that the layer PML changes its optical characteristics correspondingly with the charge image formed on the photoconductive layer PCL.

In this condition, a reading light (reproducing light) of a predetermined light intensity is applied to the photo-modulation layer PML of the recording medium shown in Fig. 11. It is apparent that the light passing through, or reflected from the photo-modulation layer PML, carries the information of the charge image on the photoconductive layer PCL.

In this case, the reading light should have its wavelength not absorbed by the photoconductive layer PCL, so that the reading light does not cause the photoconductive layer PCL becoming a low resistance, otherwise the charge image at the boundary between the photoconductive layer PCL and the photo-modulation layer PML may be lost.

The recording medium RM shown in Fig. 12 has the dielectric mirror DML which is reflective to the reading light and is disposed between the photo-modulation layer PML and photoconductive layer PCL as described previously, so that the reading light is not necessary to have a specific wavelength as in the case of the recording mediums shown in Figs. 9 to 11.

In recording information in the recording medium shown in Fig. 12, the recording system as shown in Fig. 30(a) may be used as in the case of the recording medium shown in Fig. 9.

It is apparent that the recording medium RM shown in Fig. 12 may be modified like the recording mediums shown in Figs. 10 and 11, i.e., the recording medium RM shown in Fig. 12 may be laminated with the electrode Et to the photo-modulation layer PML or the electrodes Et1 and Et2 to the photoconductive layer PCL and photo-modulation layer PML, respectively. In recording information in such modified recording mediums, the recording systems shown in Figs. 30(a) and 30(b) or in Fig. 30 may be used.

The recording medium RM shown in Fig. 13 has a dielectric layer IL between the photo-modulation layer PML and photoconductive layer PCL of the recording medium RM shown in Fig. 9.

Referring to the recording system shown in Fig. 30(a), in recording information in the recording medium RM shown in Fig. 13, an electrode Ew is contacted to the surface of the photo-modulation layer PML, and a recording head WH constructed of a transparent electrode Etw is disposed in front of the photoconductive layer PCL of the recording medium RM. With this arrangement, while connecting a power source Vb between the electrode Ew and transparent electrode Etw, an optical image of an object O is focussed by a taking lens L through the transparent electrode Etw onto the photoconductive layer PCL.

The resistance of the photoconductive layer PCL changes with the optical image of the object O focussed thereon. With the power source Vb being connected between the electrode Ew and transparent electrode Etw, the electric field intensity between the photoconductive layer PCL and dielectric layer IL changes with the resistance distribution of the photoconductive layer PCL. A charge image formed at the boundary between the photoconductive layer PCL and dielectric layer IL through discharge between the transparent electrode Etw of the recording head WH and recording medium RM therefore corresponds to the optical image of the object O.

An electric field generated by the charge image formed at the boundary between the photoconductive layer PCL and dielectric layer IL of the recording medium RM shown in Fig. 13, by using the recording system shown in Fig. 30(b), is applied to the photo-modulation layer PML, so that the layer PML changes its optical characteristics correspondingly with the charge image formed on the photoconductive layer PCL.

In this condition, a reading light (reproducing light) of a predetermined light intensity is applied to the photo-modulation layer PML of the recording medium RM shown in Fig. 13. It is apparent that the light passing through, or reflected from the photo-modulation layer PML, carries the information of the charge image on the photoconductive layer PCL.

In this case, the reading light should have its wavelength not absorbed by the photoconductive layer PCL, so that the reading light does not cause that the photoconductive layer PCL becoming low resistance, otherwise the charge image at the boundary between the photoconductive layer PCL and the photo-modulation layer PML may be lost.

The recording medium RM shown in Fig. 13 may be modified by attaching an electrode to one surface of the medium or to both surfaces, or by replacing the dielectric layer IL with the charge image forming layer CFL shown in Figs. 5 and 7. A dielectric mirror may also be provided in the recording medium RM shown in Fig. 13.

The recording systems to be used in recording information in such modified recording mediums would be apparent from the description given with respect to Figs. 1 to 13.

It is obvious that the electrodes Et, Et1 and Et2 attached to the recording medium of this embodiment are made transparent to the light having a predetermined wavelength. This is also true to all the embodiments of this invention.

Fig. 32 shows an example of the recording system whereby a charger CT is provided to charge the entire surface of the recording medium RM to a predetermined polarity before an optical image of an object is focussed thereon, the recording medium RM being of the type that there is provided the photoconductive layer PCL and the electrode Et (either transparent or opaque) at the opposite surface to the object. Fig. 32 shows an example of the recording system whereby a charger CT is provided to charge the entire surface of the recording medium RM to a predetermined polarity, and after erasing the charge on the surface, a charge image is formed by using the recording head WH constructed of the transparent electrode Etw and photoconductive layer PCLw, the recording medium RM being of the type that there is not provided with the photoconductive layer but provided with the electrode Et (either transparent or opaque) at the opposite surface to the object. The recording systems shown in Figs. 32 and 33 for charging the surface of the recording medium RM with a charger may be used not only for the embodiments described previously, but also for other recording mediums having a different structures.

Next, the embodiments shown in Figs. 14 to 28 will be described. For the photo-modulation layer PML of the recording medium RM shown in Figs. 1 to 13, an electrochromic layer ECL is used in the embodiments shown in Fig. 14 to 28.

The electrochromic layer ECL is based on "electrochromism", i.e., "a phenomenon that the color of a material reversibly changes by oxidation-reduction reaction upon application of a voltage or injection charges". And, a light passing through a body of the electrochromic material is subject to intensity change or modulation in response to the changed color.

It is well known that an electrochromic device (ECD) based upon electrochromism has been proposed heretofore. Various studies on a solid state thin film type ECD using a tungstic oxide film (WO₃ film) are being made. Studies on ECDs include a laminated structure of a tungstic oxide film (WO₃ film) and a dielectric thin film (e.g., thin film made of CR₂O₇, LiF, CaF₂, MgF₂, SiO, ZrO₂, Ta₂O₅ or the like), a laminated structure of a tungstic oxide film (WO₃) and a solid state electrolyte film (e.g., RbAg₄I₅, solid-based proton conductive member, or the like), and other laminated structures.

An electrochromic device (ECD) has characteristic properties such as distinct color, proportional relation between charge quantity and photographic density, broad field of vision, and storage function. In view of this, it has been attempted to use electrochromic devices (ECD) as image recording mediums by itself. However, there was a problem of a low response speed for material color change due to its oxidation-reduction reaction upon application of a voltage.

As described previously, the recording mediums shown in Figs. 1 to 13 tentatively store information in the form of a charge image in the charge image forming layer CFL or at the boundary between the photoconductive layer PCL and photo-modulation layer PML, and thereafter the characteristic state of the photo-modulation layer PML is changed with the electric field generated by the charge image. In this case, (1) it takes only a very short time for a charge image to be formed in the charge image forming layer CFL or at the boundary between the photoconductive layer PCL and photo-modulation layer PML, and (2) it would not be a critical problem that the photo-modulation layer PML takes time to change its characteristic state in response to the applied electric field of the charge image, as far as the change is completed before reading the charge image from the recording medium. Accordingly, the low response speed of material color change of the electrochromic layer ECL if combined with the charge image forming layer CFL by being used in place of the photo-modulation layer PML of the recording mediums RM shown in Figs. 1 to 13 does not pose a problem. The recording medium RM using the electrochromic layer ECL has various practical advantages such as superior recording performance, easy reading operation, and simple structure of recording/reproducing system.

The electrochromic layer ECL of the recording mediums shown in Figs. 14 to 28 may use a solid state thin film type ECD using a tungstic oxide film (WO₃ film), such as of a laminated structure of a tungstic oxide film (WO₃ film) and a dielectric thin film (e.g., thin film made of Cr₂O₇, LiF, CaF₂, MgF₂, SiO, ZrO₂, Ta₂O₅ or the like), and of a laminated structure of a tungstic oxide film (WO₃) and a solid state electrolyte film (e.g., RbAg₄I₅, solid-based proton conductive member, or the like).

A recording medium RM shown in Fig. 14 has a laminated structure of an electrochromic layer ECL and a charge image forming layer CFL. A recording medium RM shown in Fig. 15 has a laminated structure same as shown in Fig. 14, and an electrode Et attached to the surface of the electrochromic layer ECL (the electrode Et is a transparent electrode where it is necessary. This is applicable also to other embodiments).

The charge image forming layer CFL is made of, e.g., a dielectric layer, the material thereof being selected from a group of suitable high molecular organic substances.

The electrochromic layer ECL and charge image forming layer CFL are formed by means of vapor deposition, sputtering or the like, and thereafter laminated one upon the other. The recording medium may be formed in a disk, sheet, tape, card, or other various shapes (Such arrangement is also applicable to the recording mediums shown in Figs. 15 to 28).

Referring to the recording system shown in Fig. 29(a), in recording information in the recording medium RM shown in Fig. 14, an electrode Ew is contracted to the surface of the electrochromic layer ECL, and a recording head WH constructed of a photoconductive layer PCLw and a transparent electrode Etw is disposed in front of the recording medium RM. With this arrangement, while connecting a power source Vb between the electrode Ew and transparent electrode Etw, an optical image of an object O is focussed via a taking lens L onto the photoconductive layer PCLw.

The resistance distribution of the photoconductive layer PCLw changes with the intensity pattern of optical image of the object O focussed thereon. With the power source Vb being connected between the electrode Ew and transparent electrode Etw, the electric field intensity between the photoconductive layer PCLw and charge image forming layer CFL changes correspondingly with the resistance distribution of the photoconductive layer PCLw. A charge image formed on the charge image forming layer CFL through discharge between the recording head RH and recording medium RM therefore corresponds to the optical image of the object O.

The recording medium RM shown in Fig. 15 has the electrode Et attached thereto as described previously, so that a charge image is formed by the recording system shown in Fig. 29(b). Specifically, a recording head WH is disposed in front of the recording medium RM and a power source Vb is connected between the electrode Et originally attached to the recording medium RM and the transparent electrode Etw. With this arrangement, an optical image of an object O is focussed via a taking lens L onto the photoconductive layer PCLw.

The resistance of the photoconductive layer PCLw changes with the optical image of the object O focussed thereon. With the power source Vb being connected between the electrode Ew and transparent electrode Etw, the electric field intensity between the photoconductive layer PCLw and charge image forming layer CFL changes correspondingly with the resistance value of the photoconductive layer PCLw. A charge image formed on the charge image forming layer CFL through discharge between the recording head RH and recording medium RM therefore corresponds to the optical image of the object O.

The electric field generated by the charge image on the charge image forming layer CFL of the recording mediums RM shown in Figs. 14 and 15 is applied to the electrochromic layer ECL. Accordingly, there is formed on the electrochromic layer ECL, a color changed image corresponding to the charge image.

In this condition, a reading light (reproducing light) of a predetermined light intensity is applied to the electrochromic layer ECL. It is apparent that the light passing through, or reflected from the electrochromic layer ECL, carries the information of the charge image on the charge image forming layer CFL.

If the charge image forming layer CFL is made of transparent material to the reading light (reproducing light), the recorded information is read out where the reading light passes through the recording medium RM. If the charge image forming layer CFL is made of opaque material to the reading light, the recorded information is read out where the reading light advances through the electrochromic layer ECL, and being reflected from the charge image forming layer CFL, returns through the electrochromic layer ECL to exit therefrom.

In the case where the charge image forming layer CFL is made of opaque material so that the reproducing light must be reflected therefrom, it is necessary to have a large reflection coefficient of the boundary between the electrochromic layer ECL and charge image forming layer CFL, in order to obtain the reflected reproducing light of high intensity.

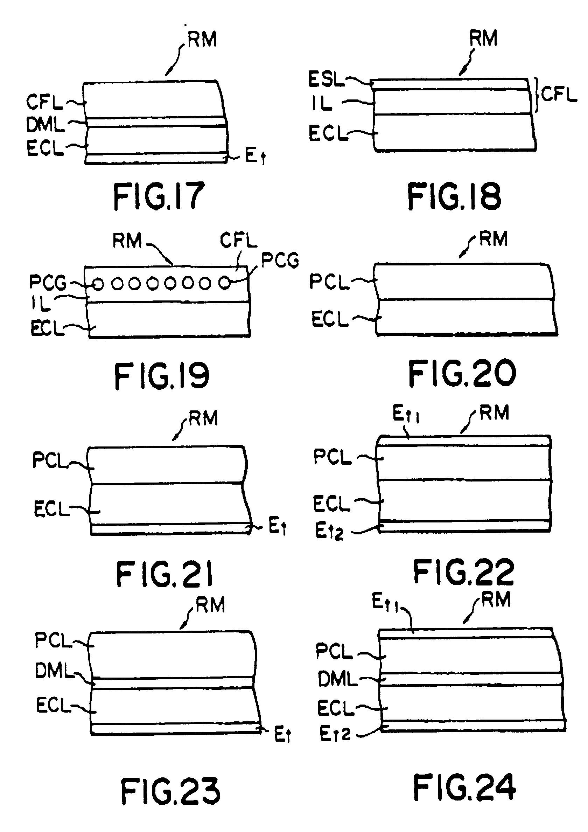

The recording mediums RM shown in Figs. 16 and 17 each have a dielectric mirror DML disposed at the boundary between the electrochromic layer ECL and charge image forming layer CFL, the layer CFL being made of opaque material to the reading light. With this arrangement, the reading light applied to the electrochromic layer ECL is efficiently reflected by the dielectric mirror DML so that the reproducing light of high intensity can be obtained.

The recording system to be used for the recording mediums RM shown in Figs. 16 and 17 may be those shown in Figs. 29(a) and 29(b) used for the recording mediums shown in Figs. 14 and 15.

Recording information in the recording medium RM is carried out as shown in Figs. 29(a) and 29(b) wherein an electric field is applied across the lamination of the layers of the recording medium RM while connecting the power source Vb between the electrodes. In other cases, recording information in the recording medium RM may be carried out in such a manner that a charger CT such as shown in Fig. 32, instead of the power source Vb shown in Figs. 29(a) and 29(b), is used to supply charges to the recording medium and apply an electric field as in the case of using the power source Vb.

Fig. 18 shows another embodiment wherein the charge image forming layer CFL of the recording medium RM is constructed of a charge transfer suppressing layer ESL and a dielectric layer IL.

The charge transfer suppressing layer ESL is made of a thin dielectric layer such as silicon dioxide thin film, or alumina thin film which film allows, by the tunnel effect, a large tunnel current to flow when a large electric field over its threshold is applied thereacross.

The layers constituting the recording medium RM shown in Fig. 18 are formed by vapor deposition, sputtering or other processes, and sequentially laminated one upon another.

For recording information in the recording medium RM shown in Fig. 18, the recording system shown in Fig. 29(a) used for the recording medium RM shown in Fig. 14 may be used.

Specifically in recording information in the recording medium RM shown in Fig. 18, the electrode Ew is contacted to the electrochromic layer ECL, and the recording head WH constructed of the transparent electrode Etw and photoconductive layer PCLw is placed in front of the charge motion suppressing layer ESL of the recording medium. With this arrangement, while connecting the power source Vb between the electrode Ew and transparent electrode Etw, an optical image of an object O is focussed via the taking lens L onto the photoconductive layer PCLw of the recording head WH.

The resistance distribution of the photoconductive layer PCLw changes with the intensity pattern of the optical image of the object O focussed thereon. With the power source Vb being connected between the electrode Ew and transparent electrode Etw, the electric field intensity between the photoconductive layer PCLw and charge transfer suppressing layer ESL changes correspondingly with the resistance distribution of the photoconductive layer PCLw. Thus a charge image corresponding to the optical image of the object O is formed, through discharge between the recording head WH and recording medium RM, on the surface of the charge transfer suppressing layer ESL of the charge image forming layer CFL.

The intensity pattern of the electric field applied across the charge transfer suppressing layer ESL and dielectric layer IL corresponds to the intensity pattern of the optical image of the object O. Due to the voltage applied from the power source Vb, a current flows across the charge motion suppressing layer ESL toward the dielectric layer IL because of the tunnel effect, so that a charge image corresponding to the optical image of the object O is formed at the boundary between the charge transfer suppressing layer ESL and dielectric layer IL.

The charge image recorded at the boundary between the two layers ESL and IL is maintained stored stably for a long period of time, because the charge image is not exposed to the atmosphere but is formed internally of the recording medium RM.

The electric field generated by the charge image formed at the boundary between the two layers ESL and IL of the charge image forming layer CFL of the recording mediums RM shown in Fig. 18 is applied to the electrochromic layer ECL. Accordingly, there is formed on the electrochromic layer ECL a color changed image corresponding to the charge image..

In this condition, a reading light (reproducing light) of a predetermined light intensity is applied to the electrochromic layer ECL. It is apparent that the light passing through, or reflected from the electrochromic layer PML, carries the information of the charge image on the charge image forming layer CFL.

If the charge image forming layer CFL is made of transparent material to the reading light (reproducing liqht), the recorded information is read out where the reading light passes through the recording medium RM. If the charge image forming layer CFL is made of opaque material to the reading light, the recorded information is read out where the reading light advances through the electrochromic layer ECL, and being reflected from the charge image forming layer CFL, returns through the electrochromic layer ECL to exit therefrom.

In the case where the charge image forming layer CFL is made of opaque material so that the reproducing light must be reflected therefrom, it is necessary to have a large reflection coefficient of the boundary between the electrochromic layer ECL and charge image forming layer CFL, in order to obtain the reflected reproducing light of high intensity.

For this purpose, a dielectric mirror DML is provided at the boundary between the electrochromic layer ECL and charge image forming layer CFL of the recording medium RM shown in Fig. 18.

It is apparent that the recording medium RM shown in Fig. 18 may have an electrode laminated additionally to one surface or both surfaces thereof. Such electrode or electrodes are made transparent to a specific wavelength where it is necessary.

The recording medium RM shown in Fig. 19 has a laminated structure of the electrochromic layer ECL and charge image forming layer CFL. The charge image forming layer CFL is made of a dielectric layer IL having therein a layer of photoconductive fine particles PCG.

The dielectric layer IL is made of a dielectric material having a high insulating resistance, e.g., a high molecular film. The photoconductive fine particle PCG layer is formed in such a manner that a number of photoconductive fine particles PCG are distributed separately from each other on the dielectric layer IL by a suitable means, and thereafter, a thin film of dielectric material is deposited, e.g., by means of vapor deposition or sputtering. In order to separately distribute photoconductive fine particles PCG, photoconductive material may be vapor-deposited or sputtered by using a mask.

The layers of the recording medium RM are formed by means of vapor deposition, sputtering or the like, and thereafter laminated one upon the other.

In order to record information in the recording medium RM shown in Fig. 19, the recording system shown in Fig. 29(a) used for recording information in the recording medium shown in Fig. 14 may be used.

Specifically, referring to the recording system shown in Fig. 29(a), in recording information in the recording medium RM shown in Fig. 19, an electrode Ew is contracted to the surface of the electrochromic layer ECL, and a recording head WH constructed of a photoconductive layer PCLw and a transparent electrode Etw is disposed in front of the charge image forming layer CFL made of the dielectric layer IL having therein the photoconductive fine particles PCG. With this arrangement, while connecting a power source Vb between the electrode Ew and transparent electrode Etw, an optical image of an object O is focussed via a taking lens L onto tne photoconductive layer PCLw.

The resistance distribution of the photoconductive layer PCLw changes with intensity pattern of the optical image of the object O focussed thereon. With the power source Vb being connected between the electrode Ew and transparent electrode Etw, the electric field intensity between the photoconductive layer PCLw and charge image forming layer CFL made of the dielectric layer IL having therein the photoconductive fine particle PCG layer, changes correspondingly with the resistance distribution of the photoconductive layer PCLw. A charge image (negative charge image in Fig. 29(a)) is therefore formed on the charge image forming layer CFL through discharge between the recording head WH and recording medium RM.

Upon application of a recording light from the light source (not shown) to the charge image forming layer CFL on which the charge image was formed, the photoconductive fine particles PCG burried within the dielectric layer IL and applied with the light, generate pairs of electron and hole. Although the dielectric layer IL is transparent to the recording light, it may be opaque to the reading light (reproducing light).

The negative charges of the negative charge image formed on the surface of the dielectric layer IL move to the holes of the photoconductive fine particles PCG because of the presence of an electric field existing between the positive holes of the particles PCG and the negative charges, so that the holes of the particles PCG are neutralized by the moved negative charge, leaving electrons of the photoconductive fine particles thus negative. As a result, a negative charge image corresponding to the optical image of the object O is stored in the layer of photoconductive fine particles PCG (PCG layer).

Since the charge image recorded in the photoconductive fine particles PCG is enclosed by the dielectric layer IL, it is held therein stably for a long period of time.

The electric field generated by the charge image formed on the PCG layer within the dielectric layer IL of the recording medium RM shown in Fig. 19, by using the adjacent recording system shown in Fig. 29(a), is applied to the electrochromic layer ECL so that there is formed a color changed image on the layer ECL in correspondence with the charge image formed on the PCG layer within the dielectric layer IL.

In this condition, a reading light (reproducing light) of a predetermined light intensity is applied to the electrochromic layer ECL. It is apparent that the light passing through, or reflected from the electrochromic layer ECL, carries the information as an intensity modulated light of the charge image on the charge image forming layer CFL.

If the charge image forming layer CFL is made of transparent material to the reading light (reproducing light), the recorded information is read out where the reading light passes through the recording medium RM. If the charge image forming layer CFL is made of opaque material to the reading light, the recorded information is read out where the reading light advances through the electrochromic layer ECL, and being reflected from the charge image forming layer CFL, returns through the electrochromic layer ECL to exit.

In the case where the charge image forming layer CFL is made of opaque material so that the reproducing light must be reflected therefrom, it is necessary to have a large the reflection coefficient of the boundary between the electrochromic layer ECL and charge image forming layer CFL, in order to obtain the reflected reproducing light of high intensity.

For this purpose, a dielectric mirror DML is provided at the boundary between the electrochromic layer ECL and charge image forming layer CFL of the recording medium RM shown in Fig. 19.

It is apparent that the recording medium RM shown in Fig. 19 may have an electrode preliminary laminated to one surface or both surfaces thereof. Such electrode or electrodes are made transparent to a specific wavelength where it is necessary.

Next, the recording mediums RM shown in Figs. 20 to 28 will be described. The recording mediums RM shown in Figs. 20 to 28 each have a laminated structure of at least an electrochromic layer ECL and a photoconductive layer PCL, in place of the laminated structure of at least the electrochromic layer ECL and the charge image forming layer CFL of the recording mediums RM shown in Figs. 14 to 19.

The recording medium RM shown in Fig. 20 has a laminated structure of the electrochromic layer ECL and the photoconductive layer PCL. The recording medium RM shown in Fig. 21 has an electrode Et laminated to the surface of the electrochromic layer ECL of the recording medium RM shown in Fig. 20. The recording medium RM shown in Fig. 22 has an electrode Et1 and electrode Et2 respectively laminated to the surfaces of the electrochromic layer ECL and the photoconductive layer PCL of the recording medium RM shown in Fig. 20. The recording medium RM shown in Fig. 23 has a dielectric mirror DML disposed between the electrochromic layer PML and photoconductive layer PCL of the recording medium RM shown in Fig. 21. The recording medium RM shown in Fig. 24 has an electrode Et1 attached also to the surface of the photoconductive layer PCL of the recording medium RM shown in Fig. 23.

Referring to a recording system shown in Fig. 30(a), in recording information in the recording medium RM shown in Fig. 20, an electrode Ew is contacted to the surface of the electrochromic layer ECL, and a recording head WH constructed of a transparent electrode Etw is disposed in front of the photoconductive layer PCL of the recording medium RM. With this arrangement, while connecting a power source Vb between the electrode Ew and transparent electrode Etw, an optical image of an object O is focussed by a taking lens L through the transparent electrode Etw onto the photoconductive layer PCL.

The resistance distribution of the photoconductive layer PCL changes with the intensity pattern of optical image of the object O focussed thereon. With the power source Vb being connected between the electrode Ew and transparent electrode Etw, the electric field intensity between the photoconductive layer PCL and electrochromic layer ECL changes correspondingly with the resistance distribution of the photoconductive layer PCL. A charge image formed at the boundary between the photoconductive layer PCL and electrochromic layer ECL which is caused through discharge between the transparent electrode Etw of the recording head WH and recording medium RM, corresponds to the optical image of the object O.

The recording medium RM shown in Fig. 21 has the electrode Et laminated thereto as described previously, so that a charge image is formed by the recording system shown in Fig. 30(b), Specifically, a recording head WH constructed of a transparent electrode Etw is disposed in front of the photoconductive layer PCL of the recording medium RM. With this arrangement, while connecting a power source Vb between the electrode Ew and transparent electrode Etw, an optical image of an object O is focussed by a taking lens L through the transparent electrode Etw onto the photoconductive layer PCL.

The resistance distribution of the photoconductive layer PCL changes with the intensity pattern of the optical image of the object O focussed thereon. With the power source Vb being connected between the electrode Ew and transparent electrode Etw, the electric field intensity between the photoconductive layer PCL and electrochromic layer ECL changes correspondingly with the resistance distribution of the photoconductive layer PCL. A charge image formed at the boundary between the photoconductive layer PCL and electrochromic layer ECL which is caused through discharge between the recording medium RM and the recording head WH, corresponds to the optical image of the object 0.

An electric field generated by the charge image formed at the boundary between the photoconductive layer PCL and electrochromic layer ECL of the recording medium RM shown in Figs. 20 and 21, by using correspondingly the recording systems shown in Figs. 30(a) and 30(b), is applied to the adjacent electrochromic ECL, so that there is formed on the electrochromic layer ECL, a color changed image corresponding to the charge image formed on the photoconductive layer PCL.

In this condition, a reading light (reproducing light) of a predetermined light intensity is applied to the electrochronic layer ECL of the recording medium shown in Figs. 20 or 21. It is apparent that the light passing through, or reflected from the electrochromic layer ECL, is intensity modulated correspondingly with the pattern of the charge image on the photoconductive layer PCL.

In this case, the reading light should have its wavelength absorbed by the photoconductive layer PCL, so that the reading light does not cause the photoconductive layer PCL becoming low resistance, otherwise the charge image at the boundary between the photoconductive layer PCL and the electrochromic layer ECL may be lost. However, even if the charge image at the boundary between the photoconductive layer PCL and electrochromic layer ECL may be lost. So that the color image changed on the electrochromic layer ECL is left unchanged by irradiation of the reproducing light, thus proper repetitive and nondestructive reproducing operations are assured.

The recording medium RM shown in Fig. 22 has the electrodes Et1 and Et2 laminated thereto as described previously, so that a charge image is formed by the recording system shown in Fig. 31, without a necessity of a recording head WH.

While connecting a power source Vb between the electrodes Et1 and Et2 respectively laminated to the surfaces of the photoconductive layer PCL and the electrochromic layer ECL, an optical image of an object O is focussed, by a taking lens L through the transparent electrode Et1 of the recording medium RM, on the photoconductive layer PCL.

The resistance distribution of the photoconductive layer PCL changes with the intensity pattern of optical image of the object O focussed thereon. With the power source Vb being connected between the electrodes Et1 and Et2 of the recording medium RM, the electric field intensity between the photoconductive layer PCL and electrochromic layer ECL changes correspondingly with the resistance distribution of the photoconductive layer PCL. A charge image is therefore formed at the boundary between the photoconductive layer PCL and electrochromic layer ECL correspondingly with the optical image of the object O.

An electric field generated by the charge image thus formed at the boundary between the photoconductive layer PCL and electrochromic layer ECL shown in Fig. 22, is applied to the adjacent electrochromic layer ECL, so that a color changed image corresponding to the charge image formed on the photoconductive layer PCL, is formed on the electrochromic layer ECL.

In this condition, a reading light (reproducing light) of a predetermined light intensity is applied to the electrochromic layer ECL of the recording medium shown in Fig. 22. It is apparent that the light passing through, or reflected from the electrochromic layer ECL, is intensity modulated corresponding to the charge image on the photoconductive layer PCL.

The recording medium RM shown in Fig. 23 has the dielectric mirror DML disposed between the photo-modulation layer PML and photoconductive layer PCL as described previously. In recording information in the recording medium RM, the recording system similar to that used for the recording medium shown in Fig. 21, i.e., the recording system shown in Fig. 30(b), may be used.

The recording medium RM shown in Fig. 24 has the electrode Et1 as laminated to the photoconductive layer PCL of the recording medium RM shown in Fig. 23, and may use the recording system shown in Fig. 31 used in writing information in the recording medium RM shown in Fig. 24.

The recording medium RM shown in Fig. 25 has a charge image forming layer CFL btween the electrochromic layer ECL and photoconductive layer PCL of the recording medium RM shown in Fig. 20.

Referring to the recording system shown in Fig. 30(a), in recording information in the recording medium RM shown in Fig. 25 an electrode Ew is contacted to the surface of the electrochromic layer ECL, and a recording head WH constructed of a transparent electrode Etw is disposed in front of the photoconductive layer PCL of the recording medium RM. With this arrangement, while connecting a power source Vb between the electrode Ew and transparent electrode Etw, an optical image of an object O is focussed by a taking lens L through the transparent electrode Etw ontc the photoconductive layer PCL.

The resistance distribution of the photoconductive layer PCL changes with the intensity pattern of the optical image of the object O focussed thereon. With the power source Vb being connected between the electrode Ew and transparent electrode Etw, the electric field intensity between the photoconductive layer PCL and charge image forming layer CFL changes correspondingly with the resistance distribution of the photoconductive layer PCL. A charge image, formed at the boundary between the photoconductive layer PCL and charge image forming layer CFL through discharge between the transparent electrode Etw of the recording head WH and recording medium RM, therefore correspond to the optical image of the object O.

An electric field generated by the charge image formed at the boundary between the photoconductive layer PCL and charge image forming layer CFL shown in Fig. 25, is applied to the electrochromic layer ECL, so that a color changed image cporresponding to the charge image formed on the photoconductive layer PCL, is formed on the electrochromic layer ECL.

In this condition, a reading light (reproducing light) of a predetermined light intensity is applied to the electrochromic layer ECL of the recording medium RM shown in Fig. 25. It is apparent that the light passing through, or reflected from the electrochromic layer ECL, carries the information of the charge image on the photoconductive layer PCL as a modulated light in accordance with the changed color.

In this case, the reading light should have its wavelength not absorbed by the photoconductive layer PCL, so that the reading light (reproducing light) does not cause the photoconductive layer PCL becoming low resistance, otherwise the charge image at the boundary between the photoconductive layer PCL and the electrochromic layer ECL may be lost. This assures as described previously, that the information stored in the form of a colored image on the electrochromic layer ECL is maintained securely.

The recording medium RM shown in Fig. 26 has an electrode Et laminated to the electrochromic layer ECL of the recording medium RM described with Fig. 25.

The recording medium RM shown in Fig. 27 has a laminated structure of a charge transfer suppressing layer ESL and dielectric layer IL, in place of the charge image forming layer CFL of the recording medium RM shown in Fig. 25. The recording medium RM in accordance with the invention shown in Fig. 28 has a dielectric layer IL which includes therein a photoconductive fine particle PCG layer, in place of the charge image forming layer CFL of the recording medium RM shown in Fig. 25.

The charge transfer suppressing layer ESL of the recording medium RM shown in Fig. 27 is made of a thin dielectric layer such as silicon dioxide thin film, or alumina thin film which film allows, by the tunnel effect, a large tunnel current to flow when a large electric field is applied thereacross.

The layers constituting the recording medium RM shown in Fig. 27 are formed by vapor deposition, sputtering or other methods, and sequentially laminated one upon another. For recording information in the recording medium RM shown in Fig. 27, the recording system shown in Fig. 30(a) may be used.

For recording information in the recording medium RM shown in Fig. 27, the electrode Ew is contacted to the electrochromic layer ECL, and the recording head WH constructed of the transparent electrode Etw is placed in front of the photoconductive layer PCL deposited upon the charge image forming layer CFL constructed of the charge transfer suppressing layer ESL and dielectric layer IL. With this arrangement, while connecting the power source Vb between the electrode Ew and transparent electrode Etw, an optical image of an object 0 is focussed via the taking lens L onto the photoconductive layer PCL of the recording medium RM.

The resistance distribution of the photoconductive layer PCL changes with the intensity pattern of the optical image of the object O focussed thereon. with the power source Vb being connected between the electrode Ew and transparent electrode Etw, the electric field intensity between the transparent electrode Etw and charge transfer suppressing layer ESL changes correspondingly with the resistance distribution of the photoconductive layer PCL. A charge image corresponding to the optical image of the object O is formed, through discharge between the recording head WH and recording medium RM, on the surface of the charge transfer suppressing layer ESL of the charge image forming layer CFL.

The intensity of the electric field applied across the charge transfer suppressing layer ESL and dielectric layer IL corresponds to the intensity of the optical image of the object O. A current flows in the charge transfer suppressing layer ESL because of the tunnel effect, so that a charge image corresponding to the optical image of the object O is formed at the boundary between the charge transfer suppressing layer ESL and dielectric layer IL.

The charge image recorded at the boundary between the two layers ESL and IL is maintained stored stably for a long period of time, because the charge image is not exposed to the atmosphere but is formed internally of the recording medium RM.

The electric field generated by the charge image formed at the boundary between the two layers ESL and IL of the charge image forming layer CFL shown in Fig. 27, is applied to the electrochromic layer ECL. Accordingly, a color changed image corresponding to the charge image is formed on the electrochromic layer ECL.

In this condition, a reading light (reproducing light) of a predetermined light intensity is applied to the electrochromic layer ECL. It is apparent that the light passing through, or reflected from the electrochromic layer PML, is modulated in accordance with the charged color.

If the charge image forming layer CFL is made of transparent material to the reading light (reproducing light), the recorded information is read out where the reading light passes through the recording medium RM. If the charge image forming layer CFL is made of opaque material to the recorded information is read out where the reading light advances through the electrochromic layer ECL, and being reflected from the charge image forming layer CFL, returns through the electrochromic layer ECL to exit therefrom.

In the case where the the charge image forming layer CFL is made of opaque material so that the reproducing light must be reflected therefrom, it is necessary to have a large reflection coefficient of the boundary between the electrochromic layer ECL and charge image forming layer CFL, in order to obtain the reflected reproducing light of high intensity.

For this purpose, a dielectric mirror DML may be provided at the boundary between the electrochromic layer ECL and charge image forming layer CFL of the recording medium RM shown in Fig. 27.

It is apparent that the recording medium RM shown in Fig. 27 may have an electrode preliminary laminated to one surface or both surfaces thereof. Such electrode or electrodes are made transparent to a specific wavelength where it is necessary.

The recording medium RM in accordance with the invention shown in Fig. 28 has a laminated structure of the electrochromic layer ECL and charge image forming layer CFL. The charge image forming layer CFL is made of a dielectric layer IL having therein a layer of photoconductive fine particles PCG (PCG layer). The dielectric layer IL is made of a dielectric material having a high insulating resistance, e.g., a high molecular film. The PCG layer is formed in such a manner that a number of photoconductive fine particles PCG are distributed separately from each other on the dielectric layer IL by a suitable means, and thereafter, a thin film of dielectric material is deposited, e.g., by means of vapor deposition or sputtering. In order to separately distribute photoconductive fine particles PCG, photoconductive material may be vapor-deposited or sputtered by using a mask.

The layers of the recording medium RM are formed by means of vapor deposition, sputtering or the like, and thereafter laminated one upon the other.

In order to record information in the recording medium R11 shown in Fig. 28, the recording system shown in Fig. 30(a) used for recording information in the recording medium shown in Fig. 27 may be used.

Specifically, referring to the recording system shown in Fig. 30(a), an optical image of an object O is focussed via a taking lens L onto the photoconductive layer PCL and changes its resistance distribution in the same manner as described for recording the information in the recording medium RM of Fig. 27.

Accordingly, the electric field intensity between the transparent eiectrode Et_{w} and the charge image forming layer CFL made of the dielectric layer IL and the PCG layer, changes correspondingly with the resistance distribution of the photoconductive layer PCL. A charge image (negative charge image in Fig. 30(a)) is therefore formed on the charge image forming layer CFL through discharge between the recording head WH and recording medium RM.

Upon application of a recording light from the light source (not shown) to the charge image forming layer CFL on which the charge image was formed, the photoconductive fine particles PCG burried within the dielectric layer IL and applied with the light, generate pairs of electron and hole. Although the dielectric layer IL is made transparent to the recording light, it may be opaque to the reading light (reproducing light).

The charges of the negative charge image formed on the surface of the dielectric layer IL move to the holes of the photoconductive fine particles PCG because of the presence of an electric field generated between the holes and the negative charges so that the holes in the particles PCG are neutralized by the negative charge, leaving electrons of the pairs of electron and hole. As a result, a negative charge image corresponding to the optical image of the object O is stored in the PCG layer.

Since the charge image recorded in the PCG layer is enclosed by the dielectric layer IL, it is held therein stably for a long period of time.

The electric field generated by the charge image formed on the PCG layer shown in Fig. 28, is applied to the electrochromic layer ECL so that an image of which a phase of color is changed or modulated in correspondence with the charge image formed on the PCG layer is formed in the electrochromic layer ECL.

It should be noted that depending on the material of the eiectrochromic layer PCL, the phase change may be one color to another, or clean to colored, or change of density of a color.

In this condition, a reading light (reproducing light) of a predetermined light intensity is applied to the electrochromic layer ECL for reading the recorded information as in the case of the previously mentioned recording mediums.

For the purpose of providing an effective reflection to the reading light, a dielectric mirror DML may be provided at the boundary between the electrochromic layer ECL and charge image forming layer CFL of the recording medium RM shown in Fig. 28.

It is apparent that the recording medium RM shown in Fig. 28 may have an electrode preliminary laminated to one surface or both surfaces thereof. Such electrode or electrodes are made transparent to a specific wavelength where it is necessary.

As described so far, according to the recording mediums of this invention, each medium is constructed in such a way that the information to be recorded is temporarily stored in the form of a charge image in the charge image forming layer CFL or at the boundary between the photoconductive layer PCL and photo-modulation layer PML, and thereafter a mode of the optical characteristic of the photo-modulation layer PML is changed or modulated in accordance with the electric field generated by the charge image. Therefore, the information can be recorded quickly and reproduced by using a reflected or penetration of the reproducing light applied to the recording medium. In addition, with the recording mediums as above, (1) it takes only a very short time for a charge image to be formed in the charge image forming layer CFL or at the boundary between the photoconductive layer PCL and photo-modulation layer PML, and (2) even if the response of the photo-modulation layer PML to the applied electric field of the charge image is slow in speed, it does not pose a problem to the recording/reproducing operation provided that the response is quick enough to the interval the recording and the subsequent reproduction. For this reason, an electrochromic layer ECL having characteristic properties such as distinct color rendition, linear relation between the injected charges and the photographic density, and storage function, can be used as the photo-modulation layer.

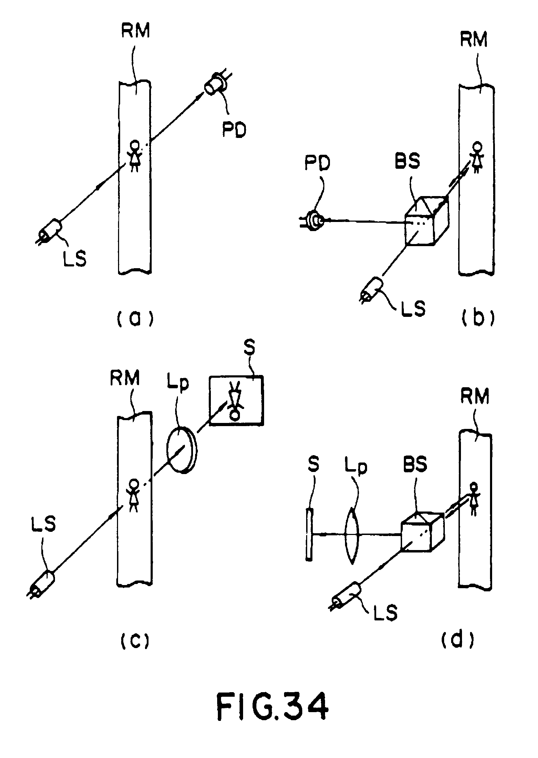

Next, the reproducing (reading) system for reproducing the image recorded in the recording medium according to this invention will be described with reference to Figs. 34 to 48. Figs. 34(a) to 34(d) illustrate how a reproduced signal of the information recorded in a transmission type or reflection type recording medium is obtained. In the reproducing system shown in Fig. 34(a), a reproducing (reading) light is transmitted (passing or penetrating) through a recording medium RM with information recorded therein, and the transmitted light is photoelectrically converted into electric signals. In the reproducing system shown in Fig. 34(b), a reproducing light is applied to a recording medium RM and the reflected light is photoelectrically converted into electric signals. In the reproducing system shown in Fig. 34(c), a reproducing light is transmitted through a recording medium RM, and the transmitted light is projected on a screen by means of a projecting optical system. In the reproducing system shown in Fig. 34(d), a reproducing light is applied to a recording medium RM, and the reflected light is projected on a screen by means of a projecting optical system.

In Figs. 34(a) to 34(d), RM represents a recording medium with information recorded therein, PD in Figs. 34(a) and 34(b) represents a photoelectric converter, LP and S in Figs. 34(c) and 34(d) represent a projecting optical system and screen, respectively, and BS in Figs. 34(b) and 34(d) represents a beam splitter. Optical beam deflection systems and other elements are omitted in Figs. 34(a) to 34(d).

For the purpose of simplifying the description of the reproducing system, it is assumed that the recording medium used herein has the structure as shown in Figs. 24 to 28, i.e., the structure that the photo-modulation layer of recording medium RM is an electrochromic layer ECL on which a color-modulated image is being formed (in reproducing information from the recording medium shown in Figs. 1 to 13 whose photo-modulation layer PML is a liquid crystal laeyr or a lithium niobate layer, a reproducing light having a specific polarization plane is applied to the recording medium, and the corresponding passed or reflected light is picked up with an analyzer, as described previously).

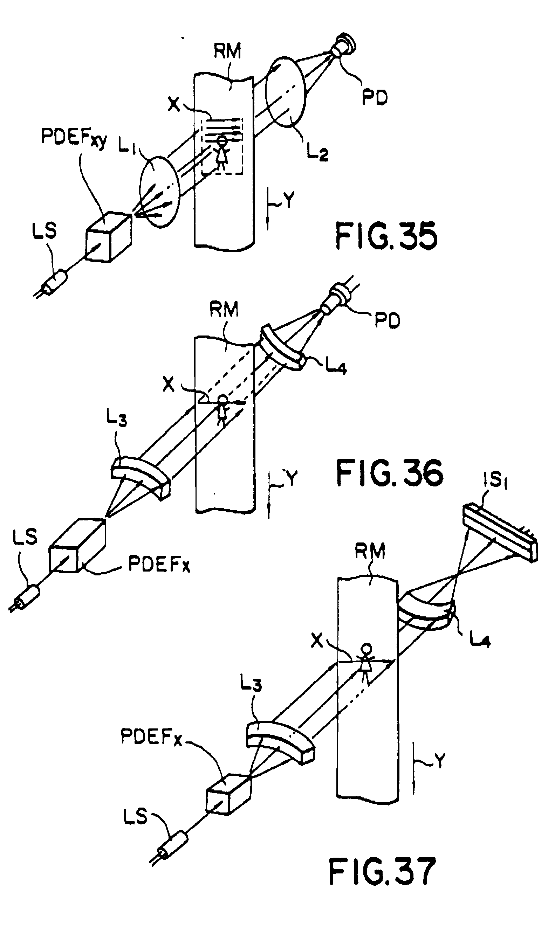

In a reproducing system shown in Fig. 35, a reproducing light from a light source LS is deflected in the horizontal and vertical directions X and Y by an optical deflector PDEFxy, and applied to a recording medium RM via a lens L1 , to thereby two-dimensionally scan the recording medium RM which is remained still.

The light transmitted through the recording medium RM is converged with a lens L2 and applied to a photoelectric converter PD which outputs electric signals corresponding to the information stored in the recording medium RM. The recording medium RM is intermittently fed one frame after another in the Y direction in synchronization with the deflection period of the optical deflector PDEFxy in the vertical direction Y.

In a reproducing system shown in Fig. 36, a reproducing light radiated from a light source LS is deflected in the horizontal direction X by an optical deflector PDEFx, and applied to a recording medium RM via a lens L3, to thereby scan in the horizontal direction X the recording medium RM which is fed in the Y direction for sub-scanning.

The light transmitted through the recording medium RM is converged with a lens L4 and applied to a photoelectric converter PD which outputs electric signals corresponding to the information stored in the recording medium RM.

In a reproducing system shown in Fig. 37, a reproducing light from a light source LS is deflected in the horizontal direction X by an optical deflector PDEFx, and applied to a recording medium RM via a lens L3, to thereby scan in the horizontal direction X the recording medium RM which is fed in the vertical direction Y for sub-scanning. The light transmitted through the recording medium RM is converged with a lens L4 and applied to a line image sensor IS1 (e.g., CCD line image sensor) which outputs electric signals corresponding to the information stored in the recording medium RM. In this reproducing system, the optical deflector PDEFx may be omitted if a beam of reproducing light having a horizontally straight section emitted from the light source LS is applied to the recording medium RM.

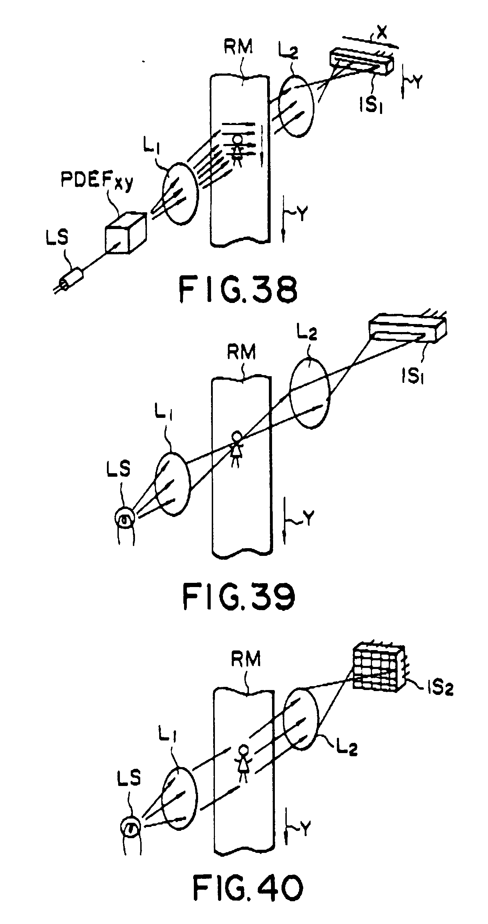

In a reproducing system shown in Fig. 38, a reproducing light from a light source LS is deflected in the horizontal and vertical directions X and Y by an optical deflector PDEFxy, and applied to a recording medium RM via a lens L1, to thereby two-dimensionally scan the recording medium RM which is remained still.

The light transmitted through the recording medium RM is converged with a lens L2 and applied to a line image sensor IS1 (e.g., CCD line sensor) which outputs electric signals corresponding to the information stored in the recording medium RM.

The line image sensor IS1 shown in Fig. 38 is arranged to be moved in the Y direction for sub-scanning in synchronization with the deflection period of the optical deflector PDEFxy in the Y direction, and the recording medium RM is intermittently fed one frame after another in the Y direction in synchronization with the deflection period of the optical deflector PDEFxy.

Instead of the line image sensor IS1 (e.g., CCD line image sensor) shown in Fig. 38, a two-dimensional image sensor (e.g., image pickup tube, solid image pickup device) may be used while maintaining it still.

In a reproducing system using a projecting optical system shown in Fig. 39, a reproducing light from a light source LS is applied via a lens L1 to a recording medium RM which is continuously moved in the Y direction for sub-scanning. The light transmitted through the recording medium RM is converged by a lens L2 and applied to a line image sensor IS1 (e.g., CCD line image sensor) which outputs electric signals corresponding to the information in the recording medium RM.

In a reproducing system using a projecting optical system shown in Fig. 40, a reproducing light from a light source LS is applied via a lens L1 to a recording medium RM which is continuously moved in the Y direction for sub-scanning. The light transmitted through the recording medium RM is converged by a lens L2 and applied to a two-dimensional image sensor IS2 (e.g., image pickup tube, solid state image pickup device) which outputs electric signals corresponding to the information in the recording medium RM.

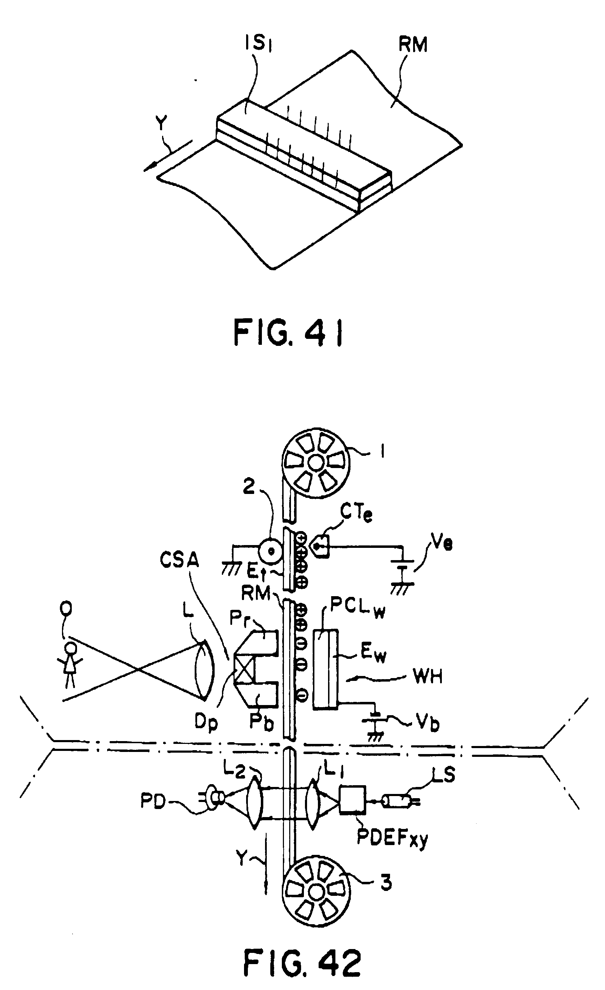

In a reproducing system shown in Fig. 41, a recording medium RM is irradiated by a reproducing light from the bottom and is moved in the Y direction for sub-scanning, and a line image sensor IS1 (e.g., CCD line image sensor) in contact with the recording medium is moved in the direction perpendicular to the sub scan direction for main scanning. The light transmitted through the recording medium RM is applied to the line image sensor IS1 which outputs electric signals corresponding to the information recorded in the recording medium RM.

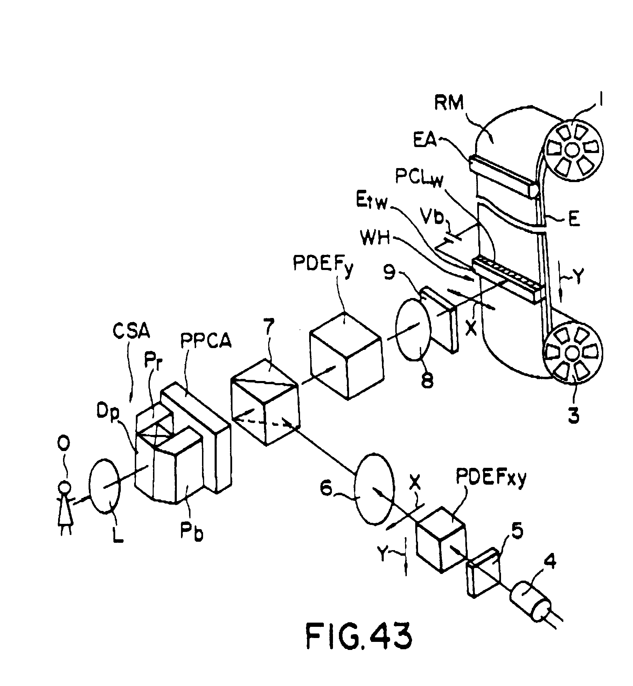

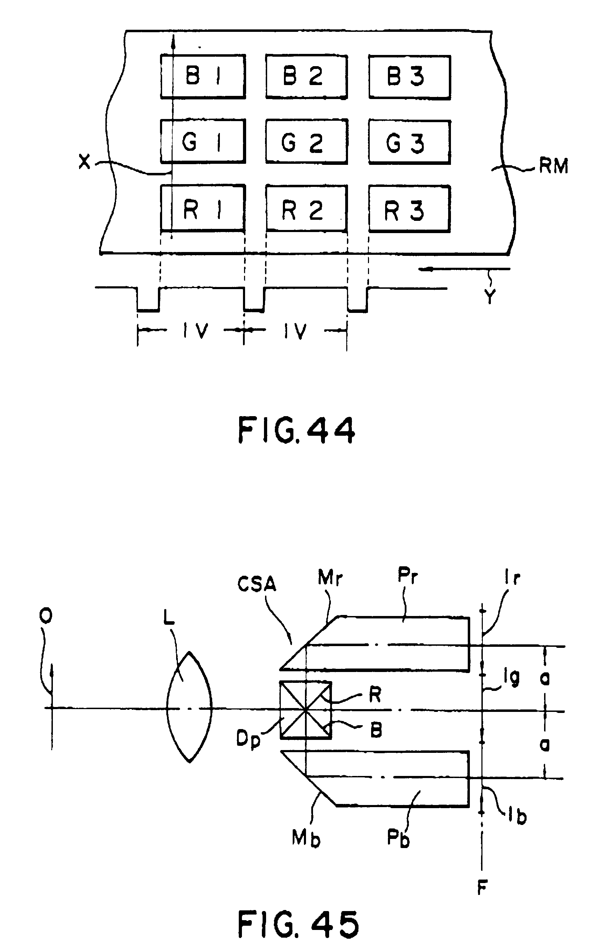

Fig. 42 is a block diagram showing the etructure of a color still image camera using the recording medium RM of this invention, and Fig. 43 is a block diagram showing the structure of a color moving image camera using the recording medium of this invention. Fig. 44 illustrates a configuration of three primary color images recorded in the recording medium RM by using the color moving image camera shown in Fig. 43.

Referring to Fig. 42, reference numerals 1 and 3 represent a reel about which a recording medium RM (in the following description, it is assumed that the recording medium has the structure as described with Fig. 15) is wound, and reference numeral 2 represents a ground roller. CTe represents an erase charger, Ve an erase power source, WH a recording head, O an object to be image-picked up, L a taking lens, CSA a three color separation optical system, and Vb a recording power source. The above-described elements indicated within an upper area partitioned by a one-dot-chain line in Fig. 42 constitute an image pickup unit, whereas the elements indicated within the lower area constitute a reproducing unit including a light source LS, optical beam deflector PDETxy, lenses L1 and L2, and photoelectric converter PD.

The recording medium RM having its electrode Et transparent and facing toward the taking lens L is fed from the feed reel 1 to the erase charger CTe supplied with a predetermined voltage by the erase power source Ve, whereat the precedingly recorded information if only in the recording medium RM is erased. Then, the recording medium RM is moved in the Y direction indicated by an arrow to the position where the optical image of an object O is recorded.

The optical image of the object O is focussed on the photoconductive layer PCLw of the recording head WH via the taking lens L, through a three color separation optical system CSA and the recording medium RM. With the transparent electrode Et of the recording medium RM being grounded via the ground roller 2, the resistance value of the photoconductive layer PCLw of the recording head WH changes in accordance with the intensity pattern of the optical image of the object O focussed on the layer PCLw. With the power source Vb being connected between the electrode Ew and the transparent electrode Et, the electric field between the photoconductive layer PCLw and charge image forming layer CFL changes in accordance with the pattern of the resistance value of the photoconductive layer PCLw. Therefore, the charge image formed on the charge image forming layer CFL through electric discharge between the recording head WH and recording medium RM corresponds to the optical image of the object O.

The electric field generated by the charge image formed on the charge image forming layer CFL is applied to the electrochromic layer ECL so that there is formed on the electrochromic layer ECL a color modulated image corresponding to the charge image formed on the charge image forming layer CFL.

At the reproducing unit shown in the lower portion of Fig. 42, a light radiated from the light source LS is deflected in the horizontal and vertical directions X and Y by the optical deflector PDEFxy and applied via the lens Ll to the recording medium RM. The light two-dimensionally scanning the recording medium RM maintained still and transmitted through the recording medium RM is intensity-modulated by the color modulated image on the electrochromic layer ECL, and is converged by the lens L2, and applied to the photoelectric converter PD which in turn outputs electric signals corresponding to the information recorded in the recording medium RM.

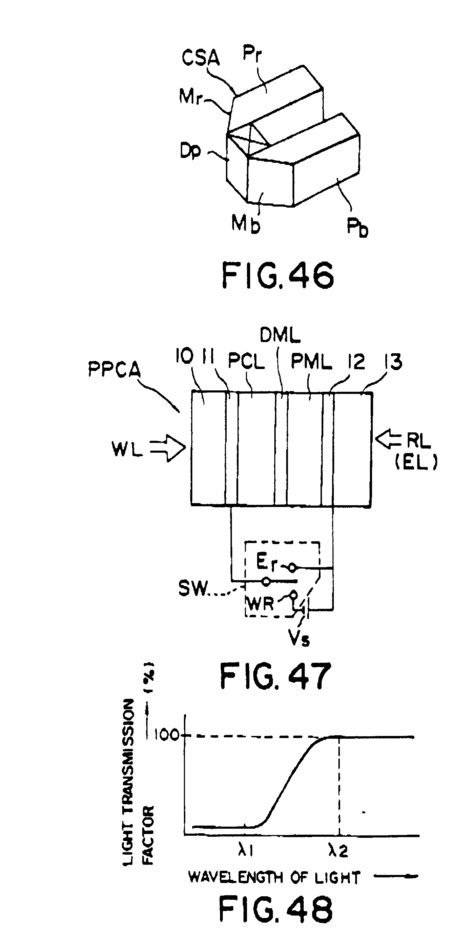

The structure of the three color separation optical system CSA shown in Figs. 42 and 43 will be described in particular with reference to Figs. 45 and 46.

The perspective view of the three color separation optical system CSA is shown in Fig. 46, and the plan view used for explaining the principle of the system CSA is shown in Fig. 45. Referring to Figs. 45 and 46, the three color separation optical system CSA is constructed of a dichroic mirror (dichroic prism) Dp composed of a dichroic R plane for reflecting red light and passing blue and green lights and a dichroic B plane disposed perpendicular to the R plane for reflecting blue light and passing green and red lights, a prism Pr with a total reflection plane Mr, and a prism Pb with a total reflection plane Mb.

Referring to Fig. 45, when the optical image of the object O is applied via the lens 1 to the dichroic prism Dp, the green light of the optical image passes through both the R and B planes and is applied to an image forming plane Ig. The red component light is reflected by the R plane and then by the total reflection plane Mr of the prism Pr, propagated within the prism Pr, and applied to an image forming plane Ir flush with, and adjacent to, the plane Ig. The blue component light is reflected by the B plane and then by the total reflection plane Mb of the prism Pb, propagated within the prism Pb, and applied to an image forming plane Ib flush with, and adjacent to, the plane Ig. The three image forming planes Ig, Ir and Ib are disposed on a common straight plane. The optical path length of the red and blue light is made longer by the prisms Pr and Pb respectively. This extended optical path length X is made equal to the displacement a between respective optical axes so that the three image forming planes Ig, Ir and Ib are disposed on the common straight plane. Since the extended optical path length X is represented by X = d(n-l)/n where d is the optical path of the prism Pr, Pb and n is the reflection factor, it is possible to make the length x equal to the displacement a by selecting the proper values of d and n so that the planes Ig, Ir and Ib are arranged at a focal point of the lens L.

With the three color separation optical system CSA constructed as above, the recording medium RM is positioned at the three image forming planes Ir, Ig and Ib so that three color separated images B1, G1 and R1 (B2, G2, R2, B3, G3, R3, ...) as shown in Fig. 44 can be recorded in, or reproduced from, the recording medium RM.

The color moving image camera using the recording medium Rm of this invention will be described with reference to Figs. 43 and 44. In Fig. 43, reference numerals 1 and 3 represent a reel about which the recording medium RM (in the following description, it is assumed that the recording medium RM has the structure as shown in Fig. 15) is wound, Ea an eraser, WH a recording head constructed of a transparent electrode Etw and photoconductive layer PCLw, Vb a recording power source, O an object, L a taking lens, CSA a three color separation optical system, PPCA a photo-photo conversion element, 4 a light source, 5 a polarizer, PDEFxy an optical deflector, 6 a lens, 7 a beam splitter, PDEFy an optical deflector, 8 a lens, and 9 an analyzer.

The optical image of the object O is applied via the taking lens L and three color separation optical system CSA to the photo-photo conversion element PPCA which may have the structure as shown in Fig. 47.

Referring to Fig. 47, reference numerals 11 and 12 represent a transparent electrode which is laminated to an optical glass substrate 10, 13. PCL represents a photoconductive layer, DML a dielectric mirror, PML an optical member made of a material which changes its optical characteristic with the applied electric field intensity distribution (the optical member may be a photo-modulation layer made of lithium niobate monocrystal, or bismuth silicate (BSO). In the following description, lithium niobate monocrystal is used), WL a write light, RL a read light, and EL an erase light.

The direction of an incident erase light EL is the same as that of the incident read light RL as shown in Fig. 47. The reason for this is that the dielectric mirror DML of the photo-photo conversion element PPCA shown in Fig. 47 has a wave-length selectivity that the read light RL of a wavelength of λ1 is reflected whereas the erase light EL of a wavelength λ2 is passed, as shown in Fig. 48.

In writing information in the photo-photo conversion element PPCA, a circuit constructed of a power source Vs and a switch SW is connected to the photo-photo conversion element PPCA, and a voltage is applied across the transparent electrodes 11 and 12 by connecting the movable contact of the switch SW to the fixed contact WR upon application of a switch control signal, so that an electric field is applied between the photoconductive layer PCL. In this condition, the read light WL is applied from the transparent eiectrode 11 side to the photo-photo conversion element PPCA.

When the light reaches the photoconductive layer PCL, the two dimensional resistance pattern thereof changes with the intensity of the incident optical image so that a charge image corresponding to the optical image is formed at the boundary between the photoconductive layer PCL and dielectric mirror DML.

In reading the optical information thus written in the photo-photo conversion element PPCA, the read light RL of a predetermined intensity emitted from a light source (not shown) is applied from the transparent electrode 12 side to the photo-photo conversion element PPCA, while applying the voltage between the transparent electrodes 11 and 12 via the fixed contact WR.

The optical member PML (e.g., lithium niobate monocrystal) serially coupled to the dielectric mirror DML and photoconductive layer PCL is being applied with an electric field generated by the charge image formed at the boundary between the photoconductive layer PCL and dielectric mirror DML.

Since the reflection factor of the lithium niobate monocrystal PML changes with the electric field by the linear electro-optical effect, it changes in accordance with the charge image having the electric field intensity distribution corresponding to the optical image.

The read light RL applied to the optical glass substrate 13 propagates to the transparent electrode 12, lithium niobate monocrystal PML, and dielectric mirror DML. The read light RL reflected by the dielectric mirror DML carries the image information corresponding to the electric field intensity distribution because of a change in the reflective index of the lithium niobate monocrystal PML, so that the reflected light carrying the information of the optical image is projected out from the optical glass substrate 13.

In erasing the information written in the element PPCA, the movable contact of the switch SW is connected to the fixed contact Er upon application of a switch control signal to short-circuit the transparent electrodes 11 and 12 thereby no electric field is applied therebetween. In this condition, the erase light EL of uniform intensity is applied to the photo-photo conversion element PPCA.

In Fig. 43, the optical image of the object o is applied as the reading light WL to the photo-photo conversion element PPCA via the taking lens L and three color separation optical system CSA so that three color separated charge images are formed in the photo-photo conversion element PPCA. The three color separated charge images are read out by the read light and simultaneously recorded in the recording medium RM as shown in Fig. 44.

As described previously with respect to Fig. 15, the recording medium RM has a laminated structure of the electrode E, electrochromic layer ECL and charge image forming layer CFL. The recording head WH constructed of the transparent electrode Etw and photoconductive layer PCLw is placed in front of the charge image forming layer CFL, with the power source Vb being connected between the electrodes E and Etw. In this condition, the read light scanns horizontally and vertically the photo-photo conversion element PPCA projected along the path of light source 4, polarizer 5, optical deflector PDEFxy, lens 6, and beam splitter 7, to thereby convert the charge image into an optical image at the photo-photo conversion element PPCA as described previously with reference to Fig. 47. The read-out optical image is applied to the photoconductive layer PCLw via the path of photo-photo conversion element PPCA, beam splitter 7, optical deflector PDEFy, lens 8, analyzer 9 and transparent electrode Etw of the write head WH. The resistance value of the photoconductive layer PCLw is therefore changed in accordance with the intensity pattern of the optical image focussed thereon.

With the power source Vb being connected between the electrodes Etw of the recording head WH and the electrode Et on the electrochromic layer ECL, the electric field between the photoconductive layer PCLw and charge image forming layer CFL changes with the pattern of the resistance value of the photoconductive layer PCLw. Accordingly, the charge image formed on the charge image forming layer CFL through electric discharge between the recording head WH and recording medium RM corresponds to the optical image of the object O.

The electric field generated by the charge image formed on the charge image forming layer CFL is applied to the electrochromic layer ECL so that there is formed a colored image corresponding to the charge image, on the electrochromic layer ECL.

In the record state of the recording medium RM shown in Fig. 44, B1, G1, R1, B2, G2, R2, ... represent three primary color images.

The electrochromic layer in the above embodiments may be replaced with a liquid crystal layer using high polymer as a binder. Figs. 49(a) and 49(b) show the structure of such a liquid crystal layer. In Fig. 49(a), there is shown a laminated structure of a dielectric layer IL, liquid crystal layer LC using high polymer as a binder, and electrode Et. The dielectric layer IL contains a material which holds electric charges, and may be constructed of a laminated structure of a charge transfer suppressing layer ESL and dielectric layer IL, or of a charge image forming layer CFL. In Fig. 49(b), there is shown a laminated structure of a photoconductive layer PCL, liquid crystal layer LC, and electrode Et.

As seen from the foregoing detailed description, the present invention can easily provide a recording medium which does not lower the sensitivity and deteriorate the resolution during the reproducing operation. A charge image can be easily written in the recording medium in such a manner that a light whose intensity is modulated by the information to be recorded, is applied to the recording medium while applying an electric field of a predetermined intensity across the laminated constitutional elements. The information written in the recording medium can be reproduced properly by applying a read light to the recording medium. The information written in a first recording medium can be easily transferred to another second recording medium in such a manner that the first and second recording mediums are disposed facing each other, a light is transmitted through the first recording medium and applied to the second recording medium while applying to the second recording medium an electric field having a predetermined intensity across the laminated constitutional elements.

## Claims

1. An optical information recording medium having a laminated structure including a charge-image forming layer (CFL) and a photo-modulation layer (PML), characterised in that said charge image forming layer comprises a dielectric layer (IL) having therein a layer of photoconductive fine particles (PCG) and a dielectric thin (IL) film formed on said layer of photoconductive fine particles (PCG).

2. An optical information recording medium according to claim 1, wherein an electrode (Et) is laminated to said photo-modulation layer (PML).

3. An optical information recording medium according to claim 1 or 2, wherein a dielectric mirror (DML) is disposed between said charge image forming layer and said photo-modulation layer.

4. An optical information recording medium according to any preceding claim, wherein said photo-modulation layer is a liquid crystal layer (LC) using high polymer as a binder.

5. An optical information recording medium according to any of claims 1 to 3, wherein said photo-modulation layer (PML) is an electrochromic layer (ECL).

6. An optical information recording medium according to claim 5 wherein the charge image forming layer (CFL) is disposed between a photoconductive layer (PCL) and said electrochromic layer (ECL).

7. A recording/reproducing system including an optical information recording medium as claimed in any preceding claim and further comprising means for applying an electric field of a predetermined intensity to the recording medium in a direction perpendicular to the plane of the layers, means for forming a charge image in said charge image forming layer corresponding to information to be recorded and means for reading information from the photomodulation layer according to the change in optical characteristics of the photomodulation layer induced by the charge image.

## Patentansprüche

1. Ein optisches Aufzeichnungsmedium mit einem Schichtaufbau, der eine, ein Ladungsbild erzeugende Schicht (CFL) und eine Fotomodulationsschicht (PML) aufweist,
**dadurch gekennzeichnet**, daß
die, ein Ladungsbild erzeugende Schicht, eine dielektrische Schicht (IL), welche eine Schicht feiner fotoleitender Teilchen (PCG) enthält, und eine dielektrische Dünnschicht (IL), die auf der Schicht feiner fotoleitender Teilchen (PCG) ausgebildet ist, umfaßt.

2. Ein optisches Aufzeichnungsmedium nach Anspruch 1, wobei eine Elektrode (Et) schichtartig auf der Fotomodulationsschicht (PML) vorgesehen ist.

3. Ein optisches Aufzeichnungsmedium nach Anspruch 1 oder 2, wobei ein dielektrischer Spiegel (DML) zwischen der, ein Ladungsbild erzeugenden Schicht und der Fotomodulationsschicht angeordnet ist.

4. Ein optisches Aufzeichnungsmedium nach einem der vorhergehenden Ansprüche, wobei die Fotomodulationsschicht eine Flüssigkristallschicht (LC) ist, in der ein Hochpolymer als Bindemittel verwendet wird.

5. Ein optisches Aufzeichnungsmedium nach einem der Ansprüche 1 bis 3, wobei die Fotomodulationsschicht (PML) eine Elektrochromschicht (ECL) ist.

6. Ein optisches Aufzeichnungsmedium nach Anspruch 5, wobei die, ein Ladungsbild erzeugende Schicht (CFL) zwischen einer fotoleitfähigen Schicht (PCL) und der Elektrochromschicht (ECL) angeordnet ist.

7. Ein Aufnahme-/Wiedergabesystem, welches ein optisches Aufzeichnungsmedium nach einem der vorhergehenden Ansprüche aufweist, und ferner Einrichtungen für das Anlegen eines elektrischen Feldes einer vorherbestimmten Stärke an das Aufzeichnungsmedium, in senkrechter Richtung zu den Schichtebenen, Einrichtungen für die Erzeugung eines Ladungsbildes in der, ein Ladungsbild erzeugenden Schicht, entsprechend der aufzuzeichnenden Information und Einrichtungen für das Lesen der Information von der Fotomodulationsschicht entsprechend der Änderung der optischen Charakteristik der Fotomodulationsschicht, die durch das Ladungsbild hervorgerufen wird.

## Revendications

1. Support d'enregistrement d'informations optiques, ayant une structure multicouche, comportant une couche de formation d'image de charges (CFL), et une couche de photo-modulation (PML), caractérisé en ce que ladite couche de formation d'image de charges comprend une couche diélectrique (IL) ayant dans celle-ci une couche de fines particules photoconductrices (PCG), et un film mince diélectrique (IL) formé sur ladite couche de fines particules photoconductrices (PCG).

2. Support d'enregistrement d'informations optiques selon la revendication 1, dans lequel une électrode (Et) est stratifiée sur ladite couche de photo-modulation (PML).

3. Support d'enregistrement d'informations optiques selon la revendication 1 ou 2, dans lequel un miroir diélectrique (DML) est placé entre ladite couche de formation d'image de charges et ladite couche de photomodulation.

4. Support d'enregistrement d'informations optiques selon l'une quelconque des revendications précédentes, dans lequel ladite couche de photo-modulation est une couche de cristaux liquides (LC) utilisant un haut polymère comme liant.

5. Support d'enregistrement d'informations optiques selon l'une quelconque des revendications 1 à 3, dans lequel ladite couche de photo-modulation est une couche électrochromique (ECL).

6. Support d'enregistrement d'informations optiques selon la revendication 5, dans lequel ladite couche de formation d'image de charges (CFL) est située entre une couche photoconductrice (PCL), et ladite couche électrochromique (ECL).

7. Système d'enregistrement/reproduction comportant un support d'enregistrement d'informations optiques selon l'une quelconque des revendications précédentes, et comprenant en outre des moyens pour appliquer un champ électrique d'une intensité prédéterminée au support d'enregistrement, dans une direction perpendiculaire au plan des couches, des moyens pour former une image de charges dans ladite couche de formation d'image de charges, correspondant aux informations à enregistrer, et des moyens pour lire des informations provenant de la couche de photomodulation, en fonction de la variation des caractéristiques optiques de la couche de photomodulation, induites par l'image de charges.
